# EUROPEAN PATENT APPLICATION

(11) **EP 2 199 743 A1**
(43) Date of publication of application: **23.06.2010**
(21) Application number: 08837281.8
(22) Date of filing: 10.10.2008
(51) Int. Cl.: G01C 21/00, G08G 1/0969

(54) **MOUNTED-ON-A-CAR INSTRUMENT AND UTTERANCE PRIORITY METHOD**

(30) Priority: 12.10.2007 JP 2007266773; 12.10.2007 JP 2007267017
(71) Applicant: Kabushiki Kaisha Kenwood, Hachioji-shi Tokyo 192-8525 (JP)
(72) Inventor: HOTTA, Nobuyuki, Hachiouji-shi Tokyo 193-0834 (JP); KUGA, Kouji, Sagamihara-shi Kanagawa 229-1105 (JP); SHIMOSHIMANO, Hideo, Hachiouji-shi Tokyo 192-0907 (JP)
(74) Representative: Kraus, Jürgen Helmut
(86) International application number: PCT/JP2008/068453
(87) International publication number: WO 2009/048134

(57) **Abstract**

It is an object to provide a mounted-on-a-car instrument configured to prevent duplicate reproduction of the same contents. A mounted-on-a-car instrument (10) is provided with a DSRC unit (3) that receives contents information from a center device (30) through a roadside apparatus (20) and a car navigation unit (1) that stores guide information on driving of a car. The mounted-on-a-car instrument (10) is further provided with an audio output unit (5) that outputs the contents information and the guide information, a memory unit (3c) that stores information of a position where the roadside apparatus (20) is arranged, and a control unit (4) that makes the audio output unit (5) output either the contents information or the guide information based on the position information stored in the memory unit (3c) in the case where the contents information and the guide information meet an output condition.

## Description

### TECHNICAL FIELD

The present invention relates to vehicle-mounted device and an utterance priority method.

### BACKGROUND ART

At present, a car navigation system, where ITS (Intelligent Transport System) vehicle-mounted device including a car navigation unit and a DSRC (Dedicated Short-Range Communication) unit is mounted on a vehicle, provides various services including ETC (Electronic Toll Collection system) and VICS (Vehicle Information and Communication System).

The vehicle-mounted device including the DSRC unit can wirelessly communicate with roadside apparatus interspersed on roads and the like and communicate with a center apparatus via the roadside apparatuses. The center apparatus manages and stores required information on individual vehicle-mounted device, and distribute the information to the vehicle-mounted device. Here, the information, which the center apparatus distributes to the vehicle-mounted device on one-to-one basis, is referred to as content information.

The content information can be distributed via the DSRC, thereby allowing users to enjoy a variety of services from the center apparatus according to their individual preferences.

As an example of the services using the DSRC, warning information to assist safe driving can be provided for the user. The warning information is included in the content information. The format of the warning information is typically according to image information or audio information.

The warning information allows the user to receive reliable, useful information according to actual road conditions and traveling speed of the vehicle.

In order to provide the users with the warning information, for example, the roadside apparatuses are preliminary arranged before curves and before places with poor visibility. When the vehicle mounted with the vehicle-mounted device enters an area allowing wireless communication with the roadside apparatus, the center apparatus distributes the information about actual road conditions to the vehicle-mounted device via the roadside apparatus.

The center apparatus can acquire information about approaching speed of the vehicle from the vehicle-mounted device. Accordingly, the center apparatus can distribute the warning information to the vehicle-mounted device when determining that it is dangerous on the basis of acquired information about approaching speed (see Patent Documents 1 and 2).
Patent Document 1: Japanese Patent Application Laid-Open No. 2002-260191
Patent Document 2: Japanese Patent Application Laid-Open No. 2001-109993

### DISCLOSURE OF THE INVENTION

### PROBLEMS TO BE SOLVED BY THE INVENTION

Here, the vehicle-mounted device described in Patent Documents 1 and 2 functions as a car navigation system and also as the DSRC. The car navigation unit and the DSRC unit controlling the respective elements independently operate. Accordingly, the content uttered by the car navigation unit and the content uttered by the DSRC unit may become the same content.

More specifically, it is a case where, after the DSRC unit utters, "a curve within 500 m", the car navigation unit utters, "a curve within 300 m".

In such a case, the user should hear audio guidance including the same content at a few seconds interval; this is irksome.

It is an object of the present invention to provide vehicle-mounted device that can prevent the identical content from being duplicated.

### MEANS FOR SOLVING THE PROBLEMS

A first aspect of a first invention provides vehicle-mounted device including a DSRC unit receiving content information from a center apparatus via a roadside apparatus, and a car navigation unit storing guidance information pertaining to traveling of a vehicle, including:
output means for outputting the content information and the guidance information;
storing means for storing position information on a position where the roadside apparatus is disposed; and
control means for causing the output means to output any one of the content information and the guidance information on the basis of the position information stored by the storing means,
if the content information and the guidance information meet condition for outputting within a predetermined term.

The vehicle-mounted device of the present invention further includes
detection means for detecting a present location of the vehicle, wherein
when the DSRC unit receives the content information via the roadside apparatus, the control means produces position information which regards the present location detected by the detection means as the position of the roadside apparatus, and causes the storing means to store the position information.

In the vehicle-mounted device of the present invention,
the control means, upon receiving prompt type content information via the roadside apparatus, produces the position information and causes the storing means to store the position information.

In the vehicle-mounted device of the present invention,
the control means calculates a distance between the vehicle and the roadside apparatus on the basis of the stored position information, and, if the calculated distance is determined to be within a predetermined distance, stops outputting accumulation type content information and the guidance information.

In the vehicle-mounted device of the present invention,
the control means calculates a time period until the vehicle reaches the position of the roadside apparatus on the basis of the stored position information, and, if the calculated time period is determined to be within a predetermined time period, stops outputting accumulation type content information and the guidance information.

In the vehicle-mounted device of the present invention,
the control means, if it is determined that a distance between the vehicle and the roadside apparatus is within a predetermined distance and a time period until the vehicle reaches the position of the roadside apparatus is within a predetermined time period on the basis of the stored position information, stops outputting accumulation type content information and the guidance information.

The vehicle-mounted device of the present invention, further includes
display means for displaying map information,
wherein the control means causes the display means to display the position of the roadside apparatus in a superimposed manner on the map information, on the basis of the position information.

A second aspect of the first invention provides an utterance priority method in vehicle-mounted device including a DSRC unit receiving content information from a center apparatus via a roadside apparatus, and a car navigation unit storing guidance information pertaining to traveling of a vehicle, including: a step of outputting the content information and the guidance information; a step of storing position information on a position where the roadside apparatus is disposed; and a step of causing the outputting means to output any one of the content information and the guidance information on the basis of the position information stored by the storing means.

A first aspect of a second invention provides
vehicle-mounted device including a DSRC unit wirelessly communicating with a center apparatus, receiving content information from the center apparatus and audio-outputting the content information, and a car navigation unit audio-outputting guidance information pertaining to traveling of a vehicle, including control means for determining whether the content information and the guidance information are substantially identical to each other or not on the basis of both, and for, if determining that both are substantially identical, causing any one of the DSRC unit and the car navigation unit to audio-output the information.

The vehicle-mounted device of the present invention further including
storing means for storing utterance precedence setting information,
wherein the control means causes the unit to precedently audio-output any one of the content information at the DSRC unit and the guidance information at the car navigation unit on the basis of the stored utterance precedence setting information.

In the vehicle-mounted device of the present invention,
the control means determines whether the content information received from the center apparatus is a prompt type or not, and, if the information is determined to be the prompt type, causes the DSRC unit to precedently audio-output the content information.

In the vehicle-mounted device of the present invention,
the control means compares a keyword included in the content information and a keyword included in the guidance information with each other, and, if a duplicated keyword is determined to exist, causes any one of the DSRC unit and the car navigation unit to audio-output the information.

In the vehicle-mounted device of the present invention,
each of the DSRC unit and the car navigation unit further includes audio input means,
the control means analyzes the audio information inputted via the audio input means, compares a keyword included in the audio information and a keyword included in any one of the content information and the guidance information with each other, and, if a duplicated keyword is determined to exist, causes any one of the DSRC unit and the car navigation unit to audio-output the information.

In the vehicle-mounted device of the present invention,
the control means, if it determines that determining there is a duplicated keyword among keywords of the content information and guidance information pertaining to the traveling of vehicle, causes any one of the DSRC unit and the car navigation unit to audio-output the content including the duplicated keyword, and causes both of the DSRC unit and the car navigation unit to audio-output the content including a keyword without duplication.

In the vehicle-mounted device of the present invention,
the content information and the guidance information include identification information indicating classification of information, and
the control means compares the identification information included in the content information and the identification information included in the guidance information with each other, determines whether both identification information are identical to each other or not, and, if it determines that they are identical, causes any one of the DSRC unit and the car navigation unit to audio-output the information.
A second aspect of the second invention provides
an utterance priority method in vehicle-mounted device including a DSRC unit wirelessly communicating with a center apparatus, receiving content information from the center apparatus and audio-outputting the content information, and a car navigation unit audio-outputting guidance information pertaining to traveling of a vehicle, including
a step of determining whether the content information and the guidance information are substantially identical to each other or not on the basis of both, and of, if both are determined to be both are substantially identical, causing any one of the DSRC unit and the car navigation unit to audio-output the information.

### EFFECTS OF THE INVENTION

According to the present invention, vehicle-mounted device acquires position information indicating a position where the roadside apparatus is disposed. Any one of the audio content from the DSRC unit and the audio content from the car navigation unit are audio-outputted on the basis of the position information. This can therefore prevent the similar content from being audio-outputted at the same term.

According to the present invention, the vehicle-mounted device, which includes the DSRC unit and the car navigation unit, can cause any one of the DSRC unit and the car navigation unit to utter the content, if the content to be uttered by the DSRC unit and the content to be uttered by the car navigation unit are substantially identical to each other.

Prevention of duplicately outputting the identical content allows the user's irksomeness to be resolved.

### BRIEF DESCRIPTION OF THE DRAWINGS

FIG. 1 is a diagram showing the overall configuration of an example of an information derivery system;
FIG. 2 is a diagram showing an example of a basic configuration of DSRC communication;
FIG. 3 is a first functional block diagram of vehicle-mounted device according to a first invention;
FIG. 4 is a flowchart when prompt type content information is reproduced;
FIG. 5 is a flowchart when guidance information is reproduced;
FIG. 6 is a flowchart when accumulation type content information is reproduced;
FIG. 7 is a flowchart showing a first position information confirming process;
FIG. 8 is a flowchart showing a second position information confirming process;
FIG. 9 is a flowchart showing a third position information confirming process;
FIG. 10 is a flowchart showing a fourth position information confirming process;
FIG. 11 is a flowchart showing a fifth position information confirming process;
FIG. 12 is a flowchart showing a process of reproducing prompt type content information;
FIG. 13 is a flowchart showing a process of reproducing guidance information;
FIG. 14 is flowchart showing a process of reproducing accumulation type content information;
FIG. 15 is a second functional block diagram of vehicle-mounted device according to a second invention;
FIG. 16 is a third functional block diagram of vehicle-mounted device according to the second invention;
FIG. 17 is a diagram showing an example of a comparison table;
FIG. 18 is a diagram showing an example of a comparison table;
FIG. 19 is a diagram showing an example of a comparison table;
FIG. 20 is a flowchart illustrating an utterance precedence setting process;
FIG. 21 is a flowchart illustrating utterance processing of a car navigation unit; and
FIG. 22A and FIG. 22B show in one body a flowchart illustrating display and utterance processes of a DSRC unit.

### Description of Symbols

- 100: information derivery system
- 10: vehicle-mounted device according to the first invention
- 20: roadside apparatus
- 30: center apparatus
- 1: car navigation unit
- 2: VICS module
- 3: DSRC unit
- 4: control unit
- C: object vehicle
- 200: vehicle-mounted device according to the second invention
- 201: car navigation unit
- 202: VICS module
- 203: DSRC unit
- 204,: 201a and 203a control unit

### BEST MODES FOR CARRYING OUT THE INVENTION

A configuration and an operation of vehicle-mounted device of a first invention according to the present invention will hereinafter be described in detail with reference to the drawings.

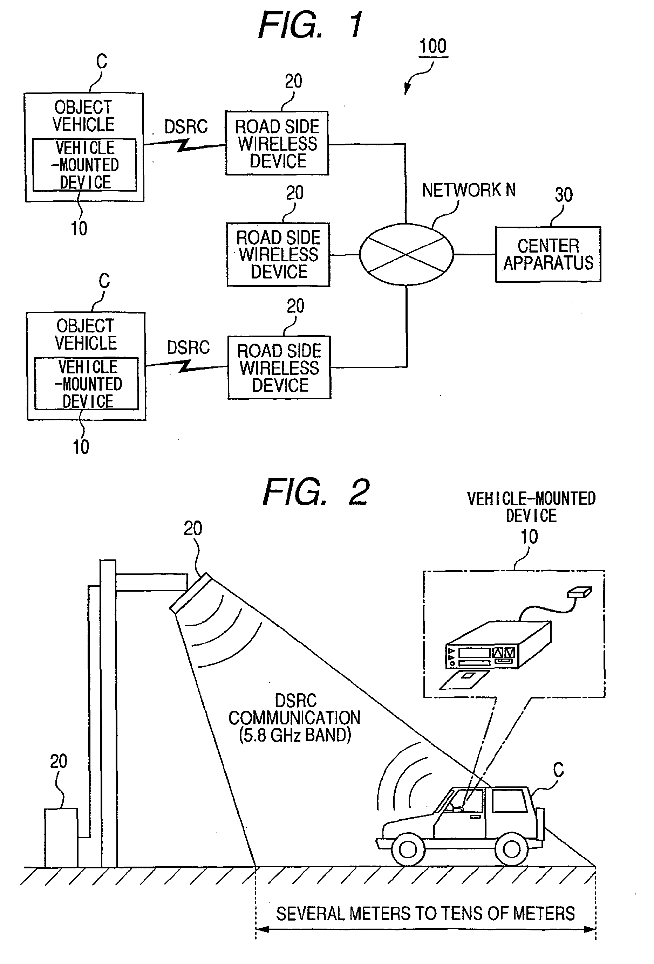

FIG. 1 shows the overall diagram of an information distribution system 100 of this embodiment.

The information derivery system 100 includes vehicle-mounted device 10, roadside apparatus 20 and center apparatus 30.

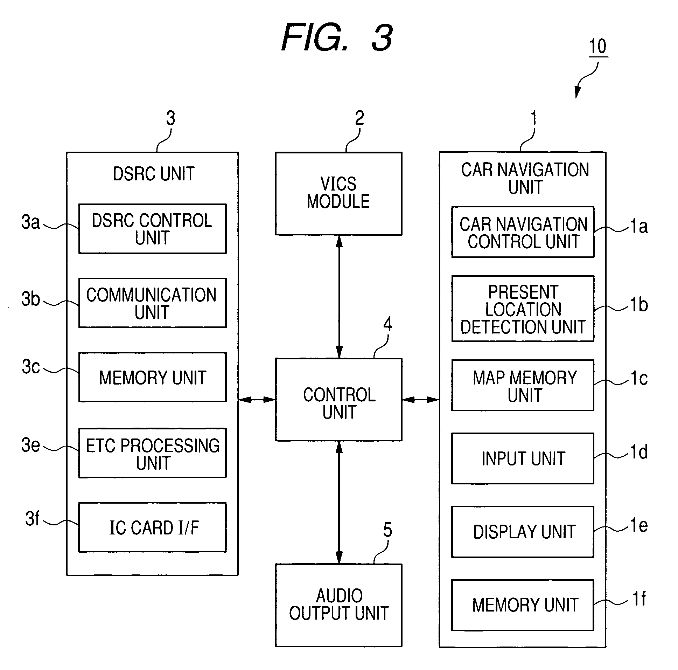

The vehicle-mounted device 10 includes a car navigation unit and a DSRC unit (see FIG. 3), and mounted at a predetermined location in an object vehicle C.

The car navigation unit can receive services such as VICS via a VICS module 2 typically by means of three media, which are an FM multiplex broadcast, an optical beacon and a radio beacon. Up to the present, the services have been provided such that various pieces of information are unidirectionally received by the vehicle-mounted device 10 with respect to each of these media.

On the other hand, the DSRC unit is capable of active type two-way communication using the 5.8 GHz band, which is for example used in ETC.

The roadside apparatuses 20 are disposed on roads and in parking lots, and interactively communicate with the DSRC unit of the vehicle-mounted device 10 using the 5.8 GHz band. The communication distance is reduced to several meters to tens of meters to reduce the radii of cells, thereby allowing reliable communication individually with the vehicle-mounted device 10.

This, for example, prevents the roadside apparatus 20 from receiving a radio wave from the DSRC unit of a vehicle other than that passing through a tollgate on a turnpike to interfere with correct billing.

Further, the same 5.8 GHz band is used in every small sector, thereby effectively utilizing frequency resources. Moreover, services closely related to places where users are, such as local information and meteorological information, can be provided.

The center apparatus 30 stores information to provide for the vehicle-mounted device 10. The center apparatus 30 is connected with the roadside apparatus 20 via a network N. When the vehicle-mounted device 10 and the roadside apparatus 20 initiate two-way communication with each other via the DSRC, the center apparatus 30 is notified of initiation of connection by the roadside apparatus 20. The center apparatus 30 transmits required information requested by the vehicle-mounted device 10 to the roadside apparatus 20. The vehicle-mounted device 10 then receives this information.

FIG. 2 shows an example of a basic configuration of the DSRC communication between the vehicle-mounted device 10 and the roadside apparatus 20.

In the case here, the object vehicle C, which includes the vehicle-mounted device 10, is traveling in a low speed or stopped in order to cause the center apparatus 30 and the vehicle-mounted device 10 to communicate with each other in a one-to-one correspondence. When the object vehicle C is in an area allowing communicating with the roadside apparatus 20, the roadside apparatus 20 initiates two-way communication with the vehicle-mounted device 10. The area allowing communication is a region whose cell radius is about several meters to tens of meters, as described above.

FIG. 3 shows a functional block diagram of the vehicle-mounted device 10.

If viewed broadly, the vehicle-mounted device 10 includes a car navigation unit 1, a VICS module 2, a DSRC unit 3 and a control unit 4. Typically, these may collectively be referred to as an ITS vehicle-mounted device.

The car navigation unit 1 mainly includes a car navigation control unit 1a, a present location detection unit 1b, a map memory unit 1c, an input unit 1d, a display unit 1e and a memory unit 1f.

The car navigation control unit 1a receives the present location of the object vehicle C outputted from the present location detection unit 1b. The car navigation control unit 1a matches the location to the geometry of roads in map information outputted from the map memory unit 1c, and causes the display unit 1e to display a map screen and a present own vehicle mark. The control unit 1a, while displaying the own vehicle mark on the map, preliminary produces guidance information pertaining to traveling of the object vehicle C and stores the information in the memory unit 1f.

The guidance information includes, for example, warning information such as "a curve within 300 m" and route information for guiding a route to a destination set by the user. The guidance information is audio-outputted (uttered) via the audio output unit 5, which will be described later. The format of the guidance information includes image information and audio information. Here will mainly be shown the audio information.

The input unit 1d includes hard key buttons such as various keys for inputting designation on navigation operations and keys for instructions of switching audio menu displays, and outputs operation signals according to these key operations to the car navigation control unit 1a.

The display unit 1e includes a monitor and/or a touch panel. The display unit 1e includes an LCD (Liquid Crystal Display), and executes a display process according to display signals inputted from the car navigation control unit 1a.

The memory unit 1f includes a recording medium preliminary stored with programs, data and the like. The memory unit 1f stores various control programs executed by the car navigation control unit 1a and data used when these control programs are executed, on the recording medium.

The VICS module 2 mainly includes three modules having VICS functions, and receives congestion information and emergency information. The three VICS functions are an optical beacon via optical communication, an FM multiplex broadcast via FM communication and a radio beacon via radio communication.

The optical beacon receives information providing services on ordinary roads using infrared rays. Since the maximum communication distance of 3.5 m is short, individual information can separately be received on a lane-by-lane basis. This can also be used for two-way communication. The optical beacons are managed by the National Police Agency.

The FM multiplex broadcast can be received at any place where radio waves from local FM broadcasting stations and the like can be received.

The radio beacon uses radio waves in the 2.4 GHz band and mainly receives information providing services on turnpikes. The maximum communication distance is about 70 m and the data transmission speed of 64 kbit/s is low. (There is a plan to shift the frequency band used for the radio beacon from 2.4 GHz band to 5.8 GHz band and integrate it with the DSRC after the fiscal year 2007.) Use of the DSRC increases the data transmission speed to 4 Mbit/s and allows two-way communication.

The DSRC unit 3 includes a DSRC control unit 3a, a communication unit 3b, a memory unit 3c, an ETC processing unit 3e and an IC card I/F unit 3f.

The DSRC control unit 3a executes centralized control by cooperation with various control programs stored in the memory unit 3c. The DSRC control unit 3a temporarily stores the content information received from the center apparatus 30 via the communication unit 3b in the memory unit 3c, and causes the display unit 1e to display the information or causes the audio output unit 5 to utter the information.

The communication unit 3b includes an aerial wire unit, which is not shown, and receives RF (Radiology Frequency) signals in the frequency band of 5.8 GHz. The communication unit 3b demodulates the received RF signals and transmits the signals to the DSRC control unit 3a. On the other hand, the communication unit 3b receives data transmitted from the DSRC control unit 3a and outputs the data via the aerial wire unit. The outputted data is to be received by the roadside apparatus 20.

The memory unit 3c includes a recording medium preliminary stored with various programs, data and the like. The memory unit 3c stores various control programs to be executed by the DSRC control unit 3a and information used when these control programs are executed.

The ETC processing unit 3e exchanges information required to balance a bill with a toll gate via wireless communication in the 5.8 GHz band. The required information includes information about the object vehicle C, an entrance tollgate, an exit tollgate, and a toll. The ETC processing unit 3e reads and writes the information from and into an IC card inserted in the IC card I/F unit 3f.

The IC card I/F unit 3f stores the IC card preliminarily stored with card-specific information in a manner capable of insertion and extraction. The ETC processing unit 3e acquires the information stored in the IC card via the IC card I/F unit 3f with respect to information required when using the ETC. The history of tolls and the like can be stored in the IC card. The ETC processing unit 3e writes the history via the IC card I/F unit 3f.

The control unit 4 controls the car navigation unit 1, the VICS module 2 and the DSRC unit 3, which have been described above, in a centralized manner.

The control unit 4 causes an audio output unit 5, which will be described later, to utter the guidance information from the car navigation unit 1 and the content information from the DSRC unit 3.

The audio output unit 5 includes a D/A converter, an AF amplifier and a loudspeaker. The audio output unit 5 D/A converts and amplifies the guidance information from the car navigation unit 1 and the content information from the DSRC unit 3, and drives the loudspeaker using an acquired analog audio signal. This allows the guidance information and the content information to be uttered.

Next, a processing operation executed by the vehicle-mounted device 10 in this embodiment will be described.

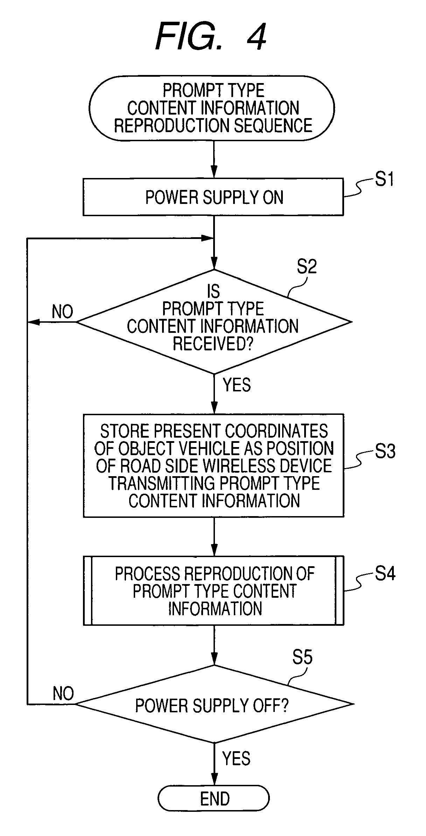

First, a basic process where the vehicle-mounted device 10 utters the prompt type content information received by the DSRC unit 3 will be described with reference to FIG. 4.

The content information includes a prompt type and an accumulation type. The prompt type is displayed or uttered without being stored in the memory unit 3c. Typically, the prompt type information is important, and includes information to be immediately notified to the user. On the other hand, the accumulation type information is temporarily stored in the memory unit 3c, and then displayed or uttered at a predetermined timing.

After power supply of the vehicle-mounted device 10 is turned on (step S1) and the DSRC unit 3 receives the content information, the control unit 4 determines whether the content information is the prompt type or not (step S2).

If the received content information is not the prompt type (step S2; NO), the control unit 4 stands by until receiving the prompt type content information from the roadside apparatus 20.

If the received content information is the prompt type (step S2; YES), the control unit 4 produces the position information that regards the present position of the object vehicle C detected by the present location detection unit 1b as the position of the roadside apparatus 20, and stores the information in the memory unit 3c (step S3).

The process in step S3 causes the vehicle-mounted device 10 to store the position of the roadside apparatus 20, which transmits the prompt type content information, at every opportunity of wireless communication.

After storing the position information in step S3, the control unit 4 executes a reproducing process on the prompt type content information (step S4).

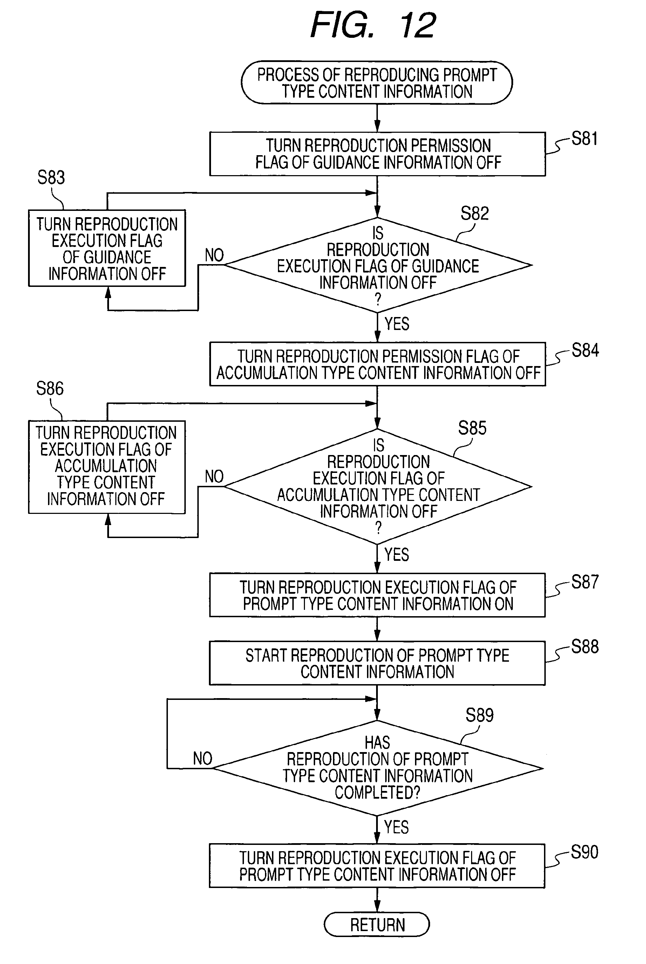

In order to illustrate S4, FIG. 12 shows a flow of a process of reproducing the prompt type content information.

First, the control unit 4 turns off a reproduction permission flag of guidance information from the car navigation unit 1 (step S81).

Here, the control unit 4 manages a reproduction request flag, a reproduction permission flag and a reproduction execution flag, and executes the reproduction process of the content information and the guidance information on the basis of the managed flags.

The reproduction request flag is for requesting reproduction when reaching a location where the information is to be reproduced. When the reproduction request flag is turned on in the control unit 4, the control unit 4 determines whether reproducing or not according to the reproduction permission flag. The reproduction permission flag is for permitting reproduction of the information. The reproduction execution flag is for executing reproduction of the information. When the reproduction permission flag is turned on, the reproduction execution flag is turned on to execute reproduction. When the reproduction request flag is turned off, the information is not to be reproduced, thereby turning off the reproduction permission and reproduction execution flag. The on/off of flags are switched as to which information is to be precedently reproduced.

For example, when causing the car navigation unit 1 to reproduce the guidance information, the control unit 4 turns on the reproduction request flag of the car navigation unit 1. The control unit 4 determines whether the reproduction request flags of the prompt type and the accumulation type content information are on or not. As to accumulation type content information, the control unit 4 turns on the reproduction permission flag concerning the information to be reproduced. Since to be reproduced within 1 second after reception, the prompt type content information only has reproduction execution flag.

The control unit 4 turns off the reproduction permission flag of the information which is not requested for reproduction, and also turns off the reproduction execution flag after a predetermined time period.

The control unit 4 determines whether the reproduction execution flag of the guidance information, which pertains to reproduction thereof by the car navigation unit 1, is off or not (step S82).

If the reproduction execution flag of the guidance information is on(step S82; NO), the control unit 4 turns off the reproduction execution flag of the guidance information (step S83).

On the other hand, the reproduction execution flag of the guidance information is off (step S82; YES), the control unit 4 turns off the reproduction permission flag of the accumulation type content information (step S84).

The control unit 4 determines whether reproduction execution flag of the accumulation type content information, which pertains to reproduction thereof by the DSRC unit 3, is on or not (step S85).

If the reproduction execution flag of the accumulation type content information is on (step S85; NO), the control unit 4 turns off the reproduction execution flag (step S86).

On the other hand, the reproduction execution flag of the accumulation type content information is off (step S85; YES), the control unit 4 turns on reproduction execution flag of the prompt type content information (step S87).

The control unit 4 causes the audio output unit 5 to reproduce the prompt type content information received by the DSRC unit 3 (step S88).

When the control unit 4 determines that the reproduction of the prompt type content information is finished (step S89; YES), the control unit 4 turns off the reproduction execution flag of the prompt type content information (step S90) and finishes the reproduction process of the prompt type content information. Subsequently, the processing proceeds to step S5 in FIG. 4.

Referring again to FIG. 4, if the power supply of the vehicle-mounted device 10 is turned off (step S5; YES), the reproduction process of the prompt type content information is finished.

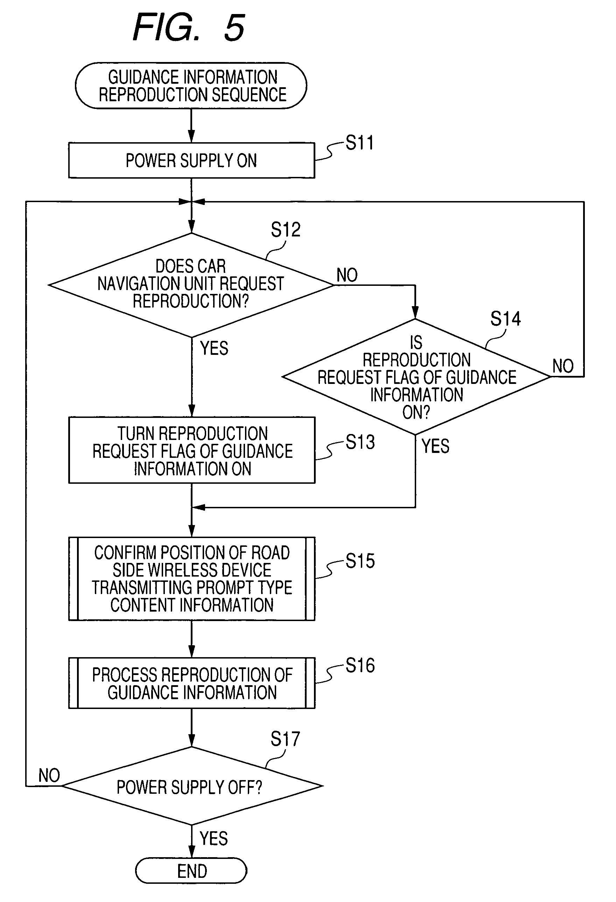

Next, a basic process that the vehicle-mounted device 10 reproduces the guidance information from the car navigation unit 1 will be described with reference to FIG. 5.

After the power supply of the vehicle-mounted device 10 is turned on (step S11), the control unit 4 determines whether or not there is indication information requesting reproduction of the guidance information by the car navigation unit 1 (step S12).

If there is the indication information requesting reproduction of the guidance information (step S12; YES), the control unit 4 turns on the reproduction request flag of the guidance information (step S13).

If there is not the indication information requesting reproduction of the guidance information (step S12; NO), the control unit 4 determines whether the reproduction request flag of the guidance information is on or not (step S14).

If the reproduction request flag is off (step S14; NO), the control unit 4 stands by until receiving the indication information.

On the other hand, the reproduction request flag of the guidance information is on (step S14; YES), the control unit 4 moves on to the next process.

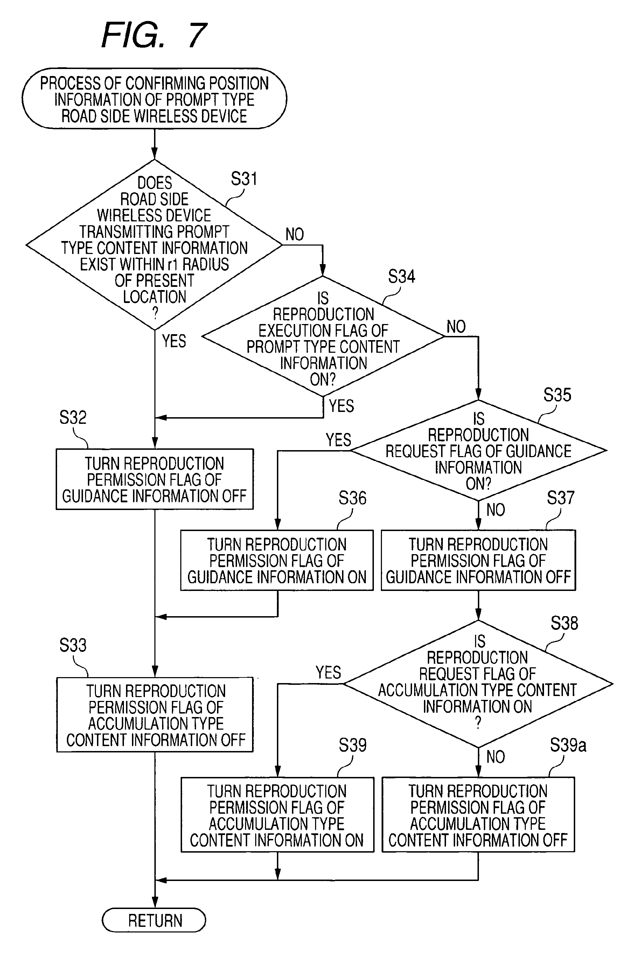

If the reproduction request flag is on, the control unit 4 executes a process of confirming the position information of the roadside apparatus 20 that transmits the prompt type content information (step S15). The confirming process of the position information in step S15 will be described later in illustration in FIGS. 7 to 11.

The control unit 4 then executes the process of reproducing the guidance information (step S16).

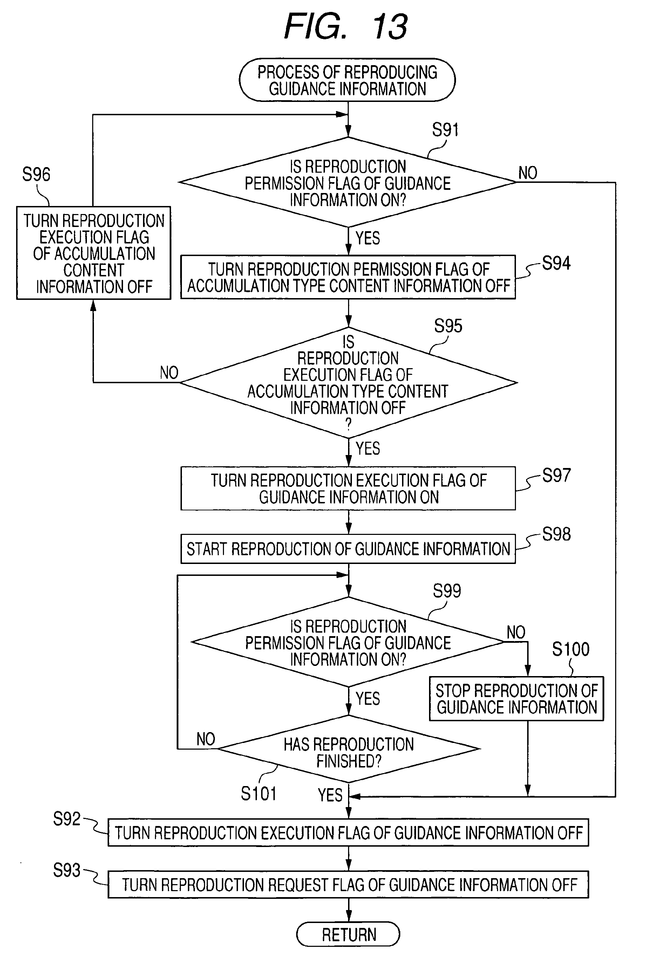

Here, in order to describe S16, the process of reproducing the guidance information will be described with reference to FIG. 13.

The control unit 4 determines whether the reproduction permission flag of the guidance information is on or not (step S91).

If the reproduction permission flag of the guidance information is off (step S91; NO), the control unit 4 turns off the reproduction execution flag of the guidance information (step S92), and then turns off the reproduction request flag of the guidance information (step S93) and finishes the process of reproducing the guidance information.

On the other hand, if the reproduction permission flag of the guidance information is on (step S91; YES), the control unit 4 turns off the reproduction permission flag of the accumulation type content information (step S94).

Next, the control unit 4 determines whether the reproduction execution flag of the accumulation type content information is off or not (step S95).

If the reproduction execution flag of the accumulation type content information is on (step S95; NO), the control unit 4 turns off the reproduction execution flag of the accumulation type content information (step S96).

On the other hand, the reproduction execution flag of the accumulation type content information is off (step S95; YES), the control unit 4 turns on the reproduction execution flag of the guidance information (step S96), and reproduces the guidance information (step S97).

During reproduction of the guidance information, the control unit 4 determines whether the reproduction permission flag of the guidance information is on or not (step S98).

If the reproduction permission flag of the guidance information is turned off during the reproduction of the guidance information (step S98; NO), the control unit 4 stops the reproduction of the guidance information (step S99).

If the reproduction permission flag of the guidance information is on during the reproduction of the guidance information (step S98; YES), the control unit 4 executes the reproduction of the guidance information until completion.

If the control unit 4 determines that the reproduction of the guidance information has been completed (step S100; YES), the control unit 4 turns off the reproduction execution flag and the reproduction request flag of the guidance information (steps S92 and S93), and finishes the process of reproducing the guidance information. Subsequently, the processing proceeds to step S16 in FIG. 5.

Referring again to FIG. 5, when the power supply of the vehicle-mounted device 10 is turned off (step S17; YES), the process of reproducing guidance information is finished.

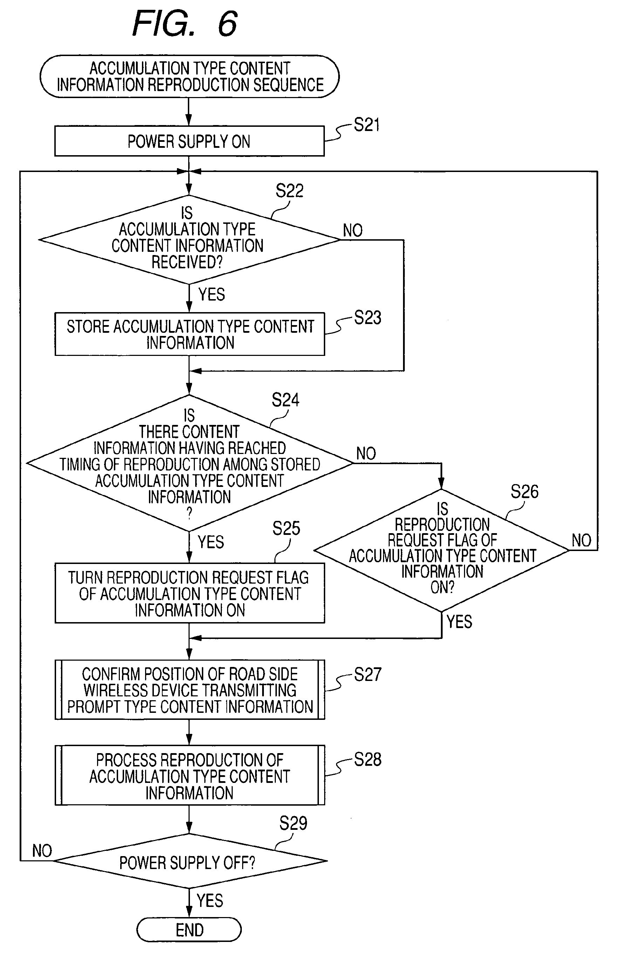

Next, a basic process of reproducing the accumulation type content information will be described with reference to FIG. 6.

First, the power supply of the vehicle-mounted device 10 is turned on (step S21) and the DSRC unit 3 receives the content information, the control unit 4 determines whether the content information is the accumulation type or not (step S22).

If the received content information is the accumulation type (step S22; YES), the control unit 4 stores the accumulation type content information in the memory unit 3c (step S23).

If the received content information is not the accumulation type (step S22; NO), the control unit 4 moves on to the next process without storing the received content information in the memory unit 3c.

The control unit 4 determines whether or not there is the content information at the timing of reproduction among the accumulation type content information having been stored in the memory unit 3c until then (step S24).

Information on reproduction timing is included in the accumulation type content information. The control unit 4 reproduces the content information, when for example the object vehicle C has reached a predetermined location or when a predetermined time has lapsed after storing the information in the memory unit 3c, on the basis of the information on reproduction timing.

If the memory unit 3c stores the content information timing of reproduction (step S24; YES), the control unit 4 turns on the reproduction request flag of the content information (step S25).

If the memory unit 3c does not store the content information at the timing of reproduction (step S24; NO), the control unit 4 determines whether the reproduction request flag of the accumulation type content information is on or not (step S26).

If the reproduction request flag of the accumulation type content information is not on (step S26; NO), the control unit 4 then stands by until receiving the content information.

On the other hand, the reproduction request flag of the accumulation type content information is on (step S26; YES), the control unit 4 moves on to the next process.

The control unit 4 turns on the reproduction request flag, and subsequently executes a confirming process of confirming the position information of the roadside apparatus 20 that transmits the prompt type content information (step S27). The confirming process of the position information in step S27 will be described later in illustration in FIGS. 7 to 11.

The control unit 4 then executes the process of reproducing the accumulation type content information (step S28).

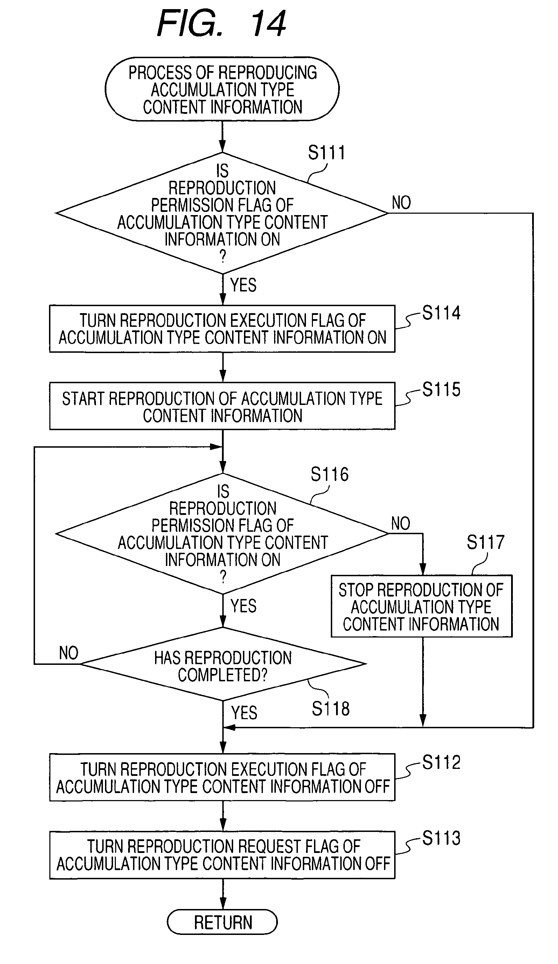

Here, in order to describe S28, the process of reproducing the accumulation type content information will be described with reference to FIG. 14.

The control unit 4 determines whether the reproduction permission flag of the accumulation type content information is on or not (step S111).

If the reproduction permission flag of the accumulation type content information is off (step S111; NO), the control unit 4 turns off the reproduction execution flag of the accumulation type content information (step S112). The control unit 4 then turns off the reproduction request flag of the accumulation type content information (step S113), and finishes the process of reproducing the accumulation type content information.

On the other hand, the reproduction permission flag of the accumulation type content information is on (step S111; YES), the control unit 4 turns on the reproduction execution flag of the accumulation type content information (step S114).

The control unit 4 then executes the process of reproducing the accumulation type content information (step S115).

During reproduction of the accumulation type content information, the control unit 4 determines whether the reproduction permission flag of the accumulation type content information is on or not (step S116).

The reproduction permission flag of the accumulation type content information is turned off (step S116; NO), the control unit 4 stops the reproduction of the accumulation type content information (step S117).

If the reproduction permission flag of the accumulation type content information is on (step S116; YES), the control unit 4 executes the reproduction of the accumulation type content information until completion.

If the control unit 4 determines that the reproduction of the accumulation type content information has been completed (step S118; YES), the control unit 4 turns off the reproduction execution flag and the reproduction request flag of the accumulation type content information (steps S112 and S113), and finishes the process of reproducing the accumulation type content information. Subsequently, the processing proceeds to step S10 in FIG. 6.

Referring again to FIG. 6, when the power supply of the vehicle-mounted device 10 is turned off (step S29; YES), the process of reproducing the accumulation type content information is finished.

The process described above allows the vehicle-mounted device 10 to reproduce the accumulation type content information at the timing of reproduction.

Next, the position information confirming process of the roadside apparatus executed in step S15 in FIG. 5 and step S27 in FIG. 6 will be described with reference to FIGS. 7 to 11. The position information confirming process to be described below is the process that confirms the position of the roadside apparatus 20 having transmitted the prompt type content information.

FIG. 7 shows a first position information confirming process.

First, the control unit 4 determines whether the roadside apparatus 20 transmitting the prompt type content information exists within an r1 radius of the object vehicle C or not (step S31).

Here, the present location information of the object vehicle C, which is to be a reference, is produced by the car navigation unit 1 and acquired by the control unit 4. The position information of the roadside apparatus 20, which is to be determined, has been stored in the memory unit 3c in the process in step S3 in FIG. 4, and read by the control unit 4. This enables the control unit 4 to execute a determination process shown in step S31 on the basis of the present location information of the object vehicle C and the position information of the roadside apparatus 20. The information of the radius r1, or a predetermined distance, may be preliminary stored in the memory unit 3c, or may be arbitrarily set via the input unit 1d.

If the roadside apparatus 20 exists within the r1 radius of the object vehicle C (step S31; YES), the control unit 4 turns off the reproduction permission flag of the guidance information from the car navigation unit 1 (step S32). The control unit 4 also turns off the reproduction permission flag of the accumulation type content information from the DSRC unit 3 (step S33), and finishes the first position information confirming process.

If the roadside apparatus 20 does not exist within the r1 radius of the object vehicle C (step S31; NO), the control unit 4 determines whether the reproduction execution flag of the prompt type content information is on or not (step S34).

If the reproduction execution flag of the prompt type content information is on (step S34; YES), the control unit 4 moves on to step S32 and executes the aforementioned steps S32 and S33.

If the reproduction execution flag of the prompt type content information is not on (step S34; NO), the control unit 4 determines whether the reproduction request flag of the guidance information is on or not (step S35).

If the reproduction request flag of the guidance information is on (step S35; YES), the control unit 4 turns on the reproduction permission flag of the guidance information (step S36). The processing proceeds to step S33.

If the reproduction request flag of the guidance information is not on (step S35; NO), the control unit 4 turns off the reproduction permission flag of the guidance information (step S37), and moves on to the next process.

The control unit 4 determines whether the reproduction request flag of the accumulation type content information is on or not (step S38). If the reproduction request flag of the accumulation type content information is on (step S38; YES), the control unit 4 turns on the reproduction permission flag of the accumulation type content information (step S39), and finishes the first position information confirming process. If the reproduction request flag of the accumulation type content information is not on (step S38; NO), the control unit 4 turns off the reproduction permission flag of the accumulation type content information (step S39a), and finishes the first position information confirming process.

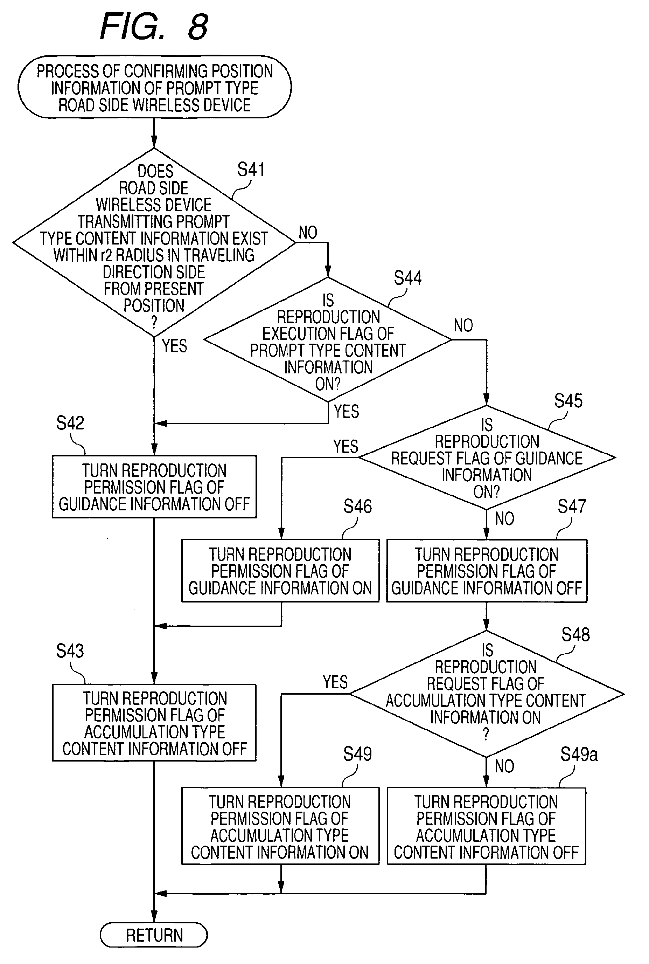

FIG. 8 shows a second position information confirming process.

The control unit 4 determines whether the roadside apparatus 20 transmitting the prompt type content information exists within an r2 radius of the object vehicle C concerning a side in the traveling direction or not (step S41).

The information of the radius r2, or a predetermined distance, may be preliminary stored in the memory unit 3c, or may be arbitrarily set via the input unit 1d by the user.

If the roadside apparatus 20 exists within the r2 radius of the object vehicle C (step S41; YES), the control unit 4 turns off the reproduction permission flag of the guidance information from the car navigation unit 1 (step S42). The control unit 4 also turns off the reproduction permission flag of the accumulation type content information from the DSRC unit 3 (step S43), and finishes the second position information confirming process.

If the roadside apparatus 20 does not exist within the r2 radius of the object vehicle C concerning the side in the traveling direction (step S41; NO), the control unit 4 determines whether the reproduction execution flag of the prompt type content information is on or not (step S44).

If the reproduction execution flag of the prompt type content information is on (step S44; YES), the control unit 4 moves on to step S42 and executes the aforementioned processes.

If the reproduction execution flag of the prompt type content information is not on (step S44; NO), the control unit 4 determines whether the reproduction request flag of the guidance information is on or not (step S45).

If the reproduction request flag of the guidance information is on (step S45 ; YES), the control unit 4 turns on the reproduction permission flag of the guidance information (step S46). The processing proceeds to step S43.

If the reproduction request flag of the guidance information is not on (step S45; NO), the control unit 4 turns off the reproduction permission flag of the guidance information (step S47), and moves on to the next process.

The control unit 4 determines whether the reproduction request flag of the accumulation type content information is on or not (step S48).

If the reproduction request flag of the accumulation type content information is on (step S48; YES), the control unit 4 turns on the reproduction request flag of the accumulation type content information (step S49), and finishes the second position information confirming process. If the reproduction request flag of the accumulation type content information is not on (step S48; NO), the control unit 4 turns off the reproduction permission flag of the accumulation type content information (step S49a), and finishes the second position information confirming process.

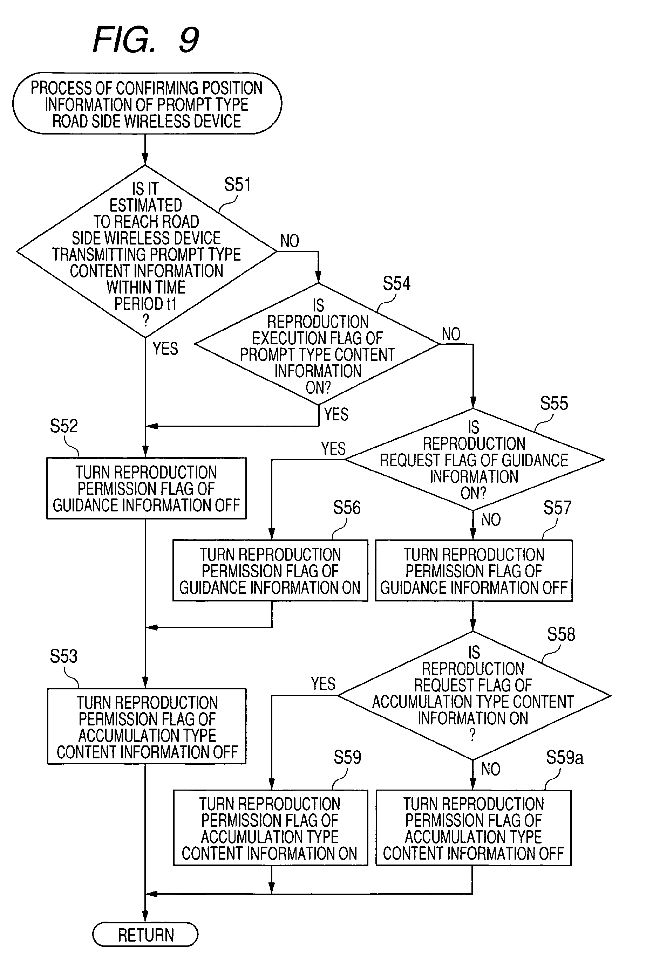

FIG. 9 shows a third position information confirming process.

The control unit 4 determines whether the object vehicle C reaches the roadside apparatus 20 transmitting the prompt type content information within a time period t1 or not (step S51).

The information of the time period t1, or a predetermined time period, may be preliminary stored in the memory unit 3c, or may be arbitrarily set via the input unit 1d by the user. The time period t1 is calculated on the basis of the present speed of the object vehicle C and the distance to the roadside apparatus 20 therefrom.

If it is estimated that the object vehicle C reaches the roadside apparatus 20 within the time period t1 (step S51; YES), the control unit 4 turns off the reproduction permission flag of the guidance information from the car navigation unit 1 (step S52). The control unit 4 also turns off the reproduction permission flag of the accumulation type content information from the DSRC unit 3 (step S53), and finishes the third position information confirming process.

If it is not estimated that the object vehicle C reaches the roadside apparatus 20 within the time period t1 (step S51; NO), the control unit 4 determines whether the reproduction execution flag of the prompt type content information is on or not (step S54).

If the reproduction execution flag of the prompt type content information is on (step S54; YES), the control unit 4 moves on to step S52 and executes the aforementioned processes.

If the reproduction execution flag of the prompt type content information is not on (step S54; NO), the control unit 4 determines whether the reproduction request flag of the guidance information is on or not (step S55).

If the reproduction request flag of the guidance information is on (step S55; YES), the control unit 4 turns on the reproduction permission flag of the guidance information (step S56). The processing proceeds to step S53.

If the reproduction execution flag of the guidance information is not on (step S55; NO), the control unit 4 turns off the reproduction permission flag of the guidance information (step S57), and moves on to the next process.

The control unit 4 determines whether the reproduction request flag of the accumulation type content information is on or not (step S58).

If the reproduction request flag of the accumulation type content information is on (step S58; YES), the control unit 4 turns on the reproduction permission flag of the accumulation type content information (step S59), and finishes the third position information confirming process.

If the reproduction request flag of the accumulation type content information is not on (step S58; NO), the control unit 4 turns off the reproduction permission flag of the accumulation type content information (step S59a), and finishes the third position information confirming process.

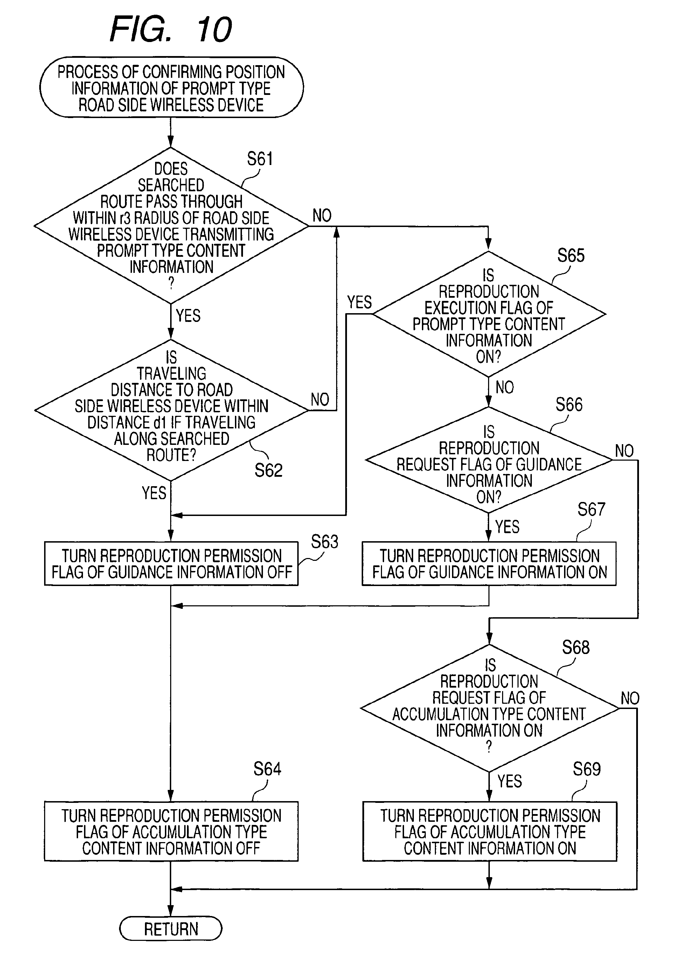

FIG. 10 shows a fourth position information confirming process.

The control unit 4 determines whether the route to the destination passes through within an r3 radius of the roadside apparatus 20 transmitting the prompt type content information or not (step S61).

The information of the radius r3, or a predetermined distance, is preliminary stored in the memory unit 3c, or may be arbitrarily set via the input unit 1d by the user.

If the route to the destination passes through within the r3 radius of the roadside apparatus 20 (step S61; YES), the control unit 4 then determines whether or not the distance from the present location to the roadside apparatus 20 is within a distance d1 when the object vehicle C travels along the route. The distance d1 is preliminary stored in the memory unit 3c, as with the radius r3.

If the distance from the present location of the object vehicle C to the roadside apparatus 20 is within the distance d1 (step S62; YES), the control unit 4 turns off the reproduction permission flag of the guidance information from the car navigation unit 1 (step S63).

The control unit 4 also turns off the reproduction permission flag of the accumulation type content information from the DSRC unit 3 (step S64), and finishes the fourth position information confirming process.

If the route to the destination does not pass through within the radius r3 (step S61; NO) or, even with the route passing therethrough, the distance from the present location of the object vehicle C to the roadside apparatus 20 is not within the distance d1 (step S62; NO), the control unit 4 determines whether the reproduction execution flag of the prompt type content information is on or not (step S65).

If the reproduction execution flag of the prompt type content information is on (step S65; YES), the control unit 4 moves on to step S63 and executes the aforementioned processes.

If the reproduction execution flag of the prompt type content information is not on (step S65; NO), the control unit 4 determines whether the reproduction request flag of the guidance information is on or not (step S66).

If the reproduction request flag of the guidance information is on (step S66; YES), the control unit 4 turns on the reproduction permission flag of the guidance information (step S67). The control unit 4 then turns off the reproduction permission flag of the accumulation type content information (step S64), and finishes the fourth position information confirming process.

On the other hand, if the reproduction request flag of the guidance information is not on (step S66; NO), the control unit 4 determines whether the reproduction request flag of the accumulation type content information is on or not (step S68).

If the reproduction request flag of the accumulation type content information is not on (step S68; NO), the control unit 4 finishes the fourth position information confirming processes.

If the reproduction request flag of the accumulation type content information is on (step S68; YES), the control unit 4 turns on the reproduction permission flag of the accumulation type content information (step S69), and finishes the position information confirming process.

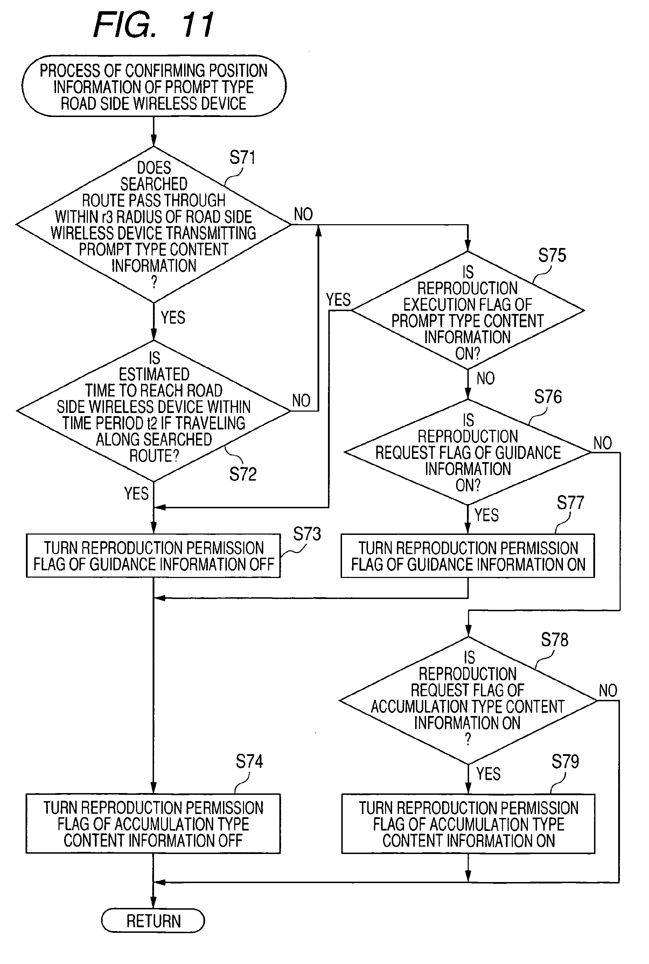

FIG. 11 shows a fifth position information confirming process.

The control unit 4 determines whether the route to the destination passes through within an r3 radius of the roadside apparatus 20 transmitting the prompt type content information or not (step S71).

The information of the radius r3 is preliminary stored in the memory unit 3c, or may be arbitrarily set via the input unit 1d by the user.

If the route to the destination passes through within the r3 radius of the roadside apparatus 20 (step S71; YES), the control unit 4 then determines whether or not the time period for which the object vehicle C can reach the roadside apparatus 20 is within the time period t2 when the object vehicle C travels along the route (step S72). The time period t2 is preliminary stored in the memory unit 3c, as with the radius r3.

If the time period for reaching the roadside apparatus 20 is within the time period t2 (step S72; YES), the control unit 4 turns off the reproduction permission flag of the guidance information from the car navigation unit 1 (step S73).

The control unit 4 also turns off the reproduction permission flag of the accumulation type content information from the DSRC unit 3 (step S74), and finishes the fifth position information confirming process.

If the route to the destination does not pass through within the radius r3 (step S71; NO) or, even with the route passing therethrough, the time period for reaching the roadside apparatus 20 is not within the time period t2 (step S72; NO), the control unit 4 determines whether the reproduction execution flag of the prompt type content information is on or not (step S75).

If the reproduction execution flag of the prompt type content information is on (step S75; YES), the control unit 4 moves on to step S73 and executes the aforementioned processes.

If the reproduction execution flag of the prompt type content information is not on (step S75; NO), the control unit 4 determines whether the reproduction request flag of the guidance information is on or not (step S76).

If the reproduction request flag of the guidance information is on (step S76; YES), the control unit 4 turns on the reproduction permission flag of the guidance information (step S77). The control unit 4 then turns off the reproduction permission flag of the accumulation type content information (step S74), and finishes the fifth position information confirming process.

On the other hand, if the reproduction request flag of the guidance information is not on (step S76; NO), the control unit 4 determines whether the reproduction request flag of the accumulation type content information is on or not (step S78).

If the reproduction request flag of the accumulation type content information is not on (step S78; NO), the control unit 4 finishes the fifth position information confirming processes.

If the reproduction request flag of the accumulation type content information is on (step S78; YES), the control unit 4 turns on the reproduction permission flag of the accumulation type content information (step S79), and finishes the fifth position information confirming process.

As described above, this embodiment allows the vehicle-mounted device 10 to reproduce any one of the content information from the DSRC unit 3 and the guidance information from the car navigation unit 1 on the basis of the position information indicating the position where the roadside apparatus 20 is disposed. This can therefore prevent the content information and the guidance information from being reproduced at the same time, or the same content from being duplicately reproduced.

On an occasion of acquiring the position information of the roadside apparatus 20, the vehicle-mounted device 10 may regard the location of the object vehicle C when the DSRC unit 3 has wirelessly communicated with the roadside apparatus 20 as the position information. This allows the vehicle-mounted device 10 to learn and store the positions of the roadside apparatuses 20 having wirelessly communicated therewith.

The position information may be what only indicates an arrangement and position of the roadside apparatuses that transmit the prompt type content information. Typically, the prompt type content information is important, and must be reproduced when the DSRC unit 3 receives the information. Accordingly, it may be configured such that audio information other than the prompt type content information is not reproduced in the proximity of the roadside apparatuses, on the basis of the position information limited to the prompt type.

The vehicle-mounted device 10 can calculate the distance between the object vehicle C and the roadside apparatus 20 on the basis of the position information of the roadside apparatus 20. If the calculated distance is within the predetermined distance (r1-r2 and d1), the vehicle-mounted device 10 can determine that the roadside apparatus 20 exists in the proximity of the object vehicle C. Accordingly, in this case, it can be configured such that information other than the prompt type content information is not reproduced until the prompt type content information is reproduced.

The vehicle-mounted device 10 can calculate the time period for which the object vehicle C reaches the roadside apparatus 20 on the basis of the position information of the roadside apparatus 20. If the calculated time period is within the predetermined time (t1 and t2), the vehicle-mounted device 10 can determine that the roadside apparatus 20 exists in the proximity of the object vehicle C. In this case, it can be configured such that information other than the prompt type content information is not reproduced until the prompt type content information is reproduced.

If the calculated distance is within the predetermined distance (r1-r2 and d1) and the calculated time period is within the predetermined time period (t1 and t2), the vehicle-mounted device 10 may determine that the roadside apparatus 20 exists in the proximity of the object vehicle C.

The vehicle-mounted device 10 can display information, for example icons, indicating the positions of the roadside apparatuses 20 on the map displayed on the display unit 1e in a superimposed manner. This allows the user to visually grasp the positions of the roadside apparatus 20.

A configuration and an operation of an embodiment of a second invention of vehicle-mounted device according to the present invention will hereinafter be described with reference to the drawings.

FIG. 1 shows the overall diagram of an information distributing system 100 according to this embodiment. FIG. 2 shows an example of a basic configuration of the DSRC communication. Since descriptions on FIGS. 1 and 2 are similar to those of the first invention, the descriptions are omitted here.

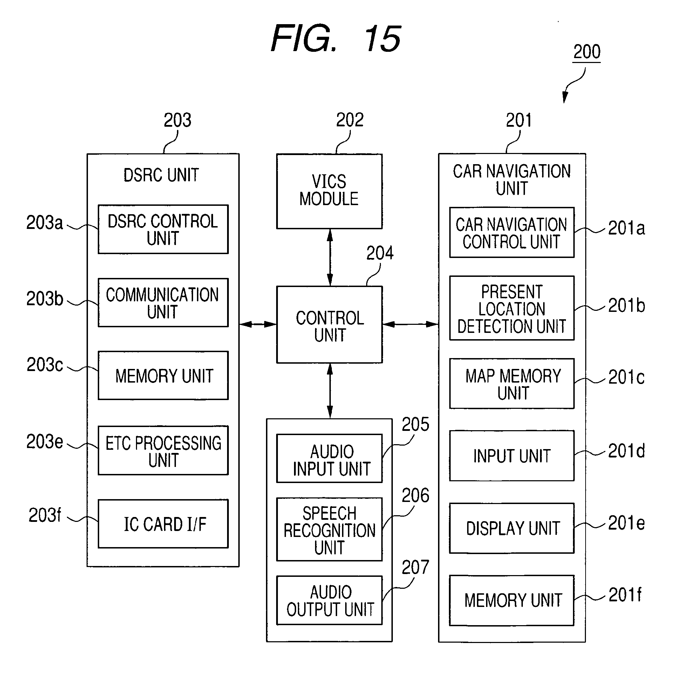

FIG. 15 shows a second functional block diagram of the vehicle-mounted device 200.

If viewed broadly, the vehicle-mounted device 200 includes a car navigation unit 201, a VICS module 202, a DSRC unit 203, a control unit 204, an audio input unit 205, a speech recognition unit 206 and an audio output unit 207. Typically, these may collectively be referred to as an ITS vehicle-mounted device.

The car navigation unit 201 mainly includes a car navigation control unit 201a, a present location detection unit 201b, a map memory unit 201c, an input unit 201d, a display unit 201e and memory unit 201f.

The car navigation control unit 201a receives the present location of the object vehicle C outputted from the present location detection unit 201b. The car navigation control unit 201a matches the location to the geometry of roads in map data outputted from the map memory unit 201c, and causes the display unit 201e to display a map screen and a present own vehicle mark. The control unit 201a, while displaying the own vehicle mark on the map, preliminary produces guidance information pertaining to traveling of the object vehicle C and stores the information in the memory unit 201f. The guidance information includes, for example, warning information such as "a curve within 300 m" and route information for guiding a route to the destination set by the user. The guidance information is audio-outputted (uttered) via the audio output unit 207, which will be described later.

The format of the guidance information includes image information and audio information. Here will mainly be shown the audio information.

The input unit 201d includes hard key buttons such as various keys for inputting designation on navigation operations and keys for instructions of switching audio menu displays, and outputs operation signals according to these key operations to the car navigation control unit 201a.

The display unit 201e includes a monitor and/or a touch panel. The display unit 201e includes an LCD (Liquid Crystal Display), and executes a display process according to display signals inputted from the car navigation control unit 201a.

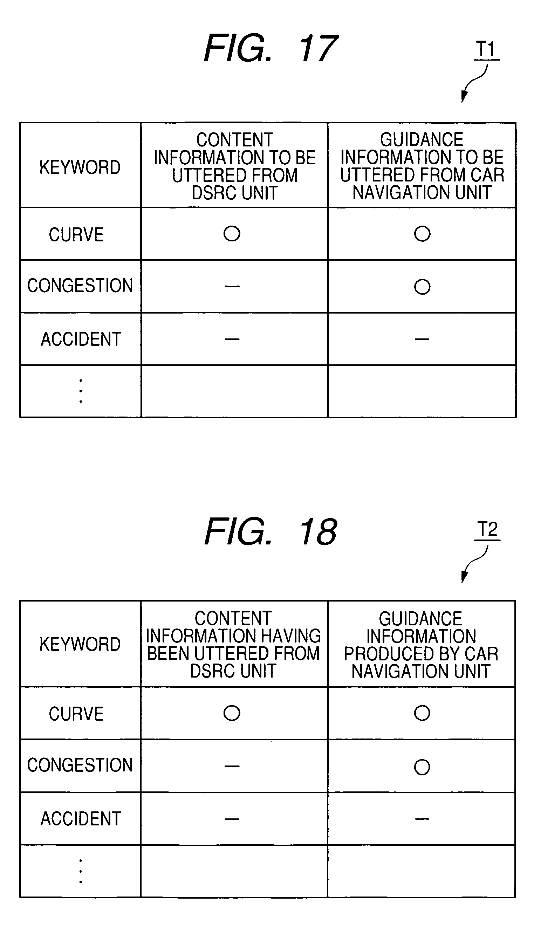

The memory unit 201f includes a recording medium preliminary stored with programs, data and the like. The memory unit 201f stores various control programs executed by the car navigation control unit 201a and data used when these control programs are executed, on the recording medium. The memory unit 201f also stores tables to which the control unit 204 refers in a comparison process. The tables will be described with reference to FIGS. 17 to 19.

The VICS module 202 mainly includes three modules having VICS functions, and receives congestion information and emergency information. The three VICS functions are an optical beacon via optical communication, an FM multiplex broadcast via FM communication and a radio beacon via radio communication.

The optical beacon receives information providing services on ordinary roads using infrared rays. Since the maximum communication distance of 3.5 m is short, individual information can separately be received on a lane-by-lane basis. This can also be used for two-way communication. The optical beacons are managed by the National Police Agency.

The FM multiplex broadcast can be received at any place where radio waves from local FM broadcasting stations and the like can be received.

The radio beacon uses radio waves in the 2.4 GHz band and mainly receives information providing services on turnpikes. The maximum communication distance is about 70 m and the data transmission speed of 64 kbit/s is low. (There is a plan to shift the frequency band used for the radio beacon from 2.4 GHz band to 5.8 GHz band and integrate it with the DSRC after the fiscal year 2007.) Use of the DSRC increases the data transmission speed to 4 Mbit/s and enables two-way communication.

The DSRC unit 203 includes a DSRC control unit 203a, a communication unit 203b, a memory unit 203c, an ETC processing unit 203e and an IC card I/F unit 203f.

The DSRC control unit 203a controls each unit of the DSRC unit 203 in a centralized manure by cooperation with various control programs stored in the memory unit 203c. The DSRC control unit 203a temporarily stores the content information received from the center apparatus 30 via the communication unit 203b in the memory unit 203c, and causes the display unit 201e to display this information or causes the audio output unit 207 to audio-output the information.

The communication unit 203b includes an aerial wire unit, which is not shown, and receives RF (Radiology Frequency) signals in the frequency band of 5.8 GHz. The communication unit 203b demodulates the received RF signals and transmits the signals to the DSRC control unit 203a. On the other hand, the communication unit 203b receives data transmitted from the DSRC control unit 203a and outputs the data via the aerial wire unit. The outputted data is to be received by the roadside apparatus 20.

The memory unit 203c includes a recording medium preliminary stored with various programs, data and the like. The memory unit 203c stores various control programs to be executed by the DSRC control unit 203a and data used when these control programs are executed.

The ETC processing unit 203e exchanges information required to balance a bill with a toll gate via wireless communication in the 5.8 GHz band. The required information includes information about the object vehicle C, an entrance tollgate, an exit tollgate, and a toll. The ETC processing unit 203e reads and writes the information from and into an IC card inserted in the IC card I/F unit 203f.

The IC card I/F unit 203f stores the IC card preliminarily stored with card-specific information in a manner capable of insertion and extraction. The ETC processing unit 203e acquires the information stored in the IC card via the IC card I/F unit 203f with respect to information required when using ETC. The history of tolls and the like can be stored in the IC card. The ETC processing unit 203e writes the history via the IC card I/F unit 203f.

The control unit 204 controls the car navigation unit 1, the VICS module 202 and the DSRC unit 203, which have been described above, in a centralized manner.

The control unit 204 also executes a process of comparing content information to be uttered or having been uttered with guidance information to be uttered or having been uttered.

A comparison process between the content information and the guidance information performed by the control unit 204 will be described with reference to FIGS. 17 to 19.

FIG. 17 shows a comparison table T1 of keywords.

The comparison table T1 shown in FIG. 17 is stored in the memory unit 201f or the memory unit 203c. The comparison table T1 is referred to when the content information to be uttered by the DSRC unit 203 and the guidance information to be uttered by the car navigation unit 201 are compared with each other.

In the comparison table T1, keywords ("curve", "congestion", "accident", etc.) are preliminary set. These may arbitrarily be set by the user via the input unit 201d.

The control unit 204 determines whether or not the keywords are duplicately used in the content information to be uttered by the DSRC unit 203 and the guidance information to be uttered.

The content information to be determined is information received by the DSRC unit 203 from the roadside apparatus 20 immediately before the control unit 204 executes the comparison process and stored in the memory unit 203c. The control unit 204 extracts the keywords from each of the content information stored in the memory unit 203c and the guidance information stored in the memory unit 201f.

The control unit 204 determines whether the extracted keywords include the keywords set in the comparison table T1 or not.

If the control unit 204 determines that the same keyword is included in both the content information and the guidance information with respect to the comparison table T1, the control unit 204 determines that both of the information is substantially identical to each other. In the comparison table in FIG. 17, the keyword "curve" is duplicately used.

If the control unit 204 determines that they are substantially identical, utterance on "curve" is executed by any one of the car navigation unit 201 and the DSRC unit 203.

FIG. 18 shows a comparison table T2 of keywords.

The comparison table T2 shown in FIG. 18 is stored in the memory unit 201f or the memory unit 203c. The comparison table T2 is referred to when the latest content information having been uttered by the DSRC unit 203 and the guidance information to be hereinafter uttered by the car navigation unit 201 are compared with each other.

In the comparison table T2, the keywords ("curve", "congestion", "accident", etc.) are preliminary set, as in the comparison table T1. These may arbitrarily be set by the user via the input unit 201d.

The control unit 204 determines whether these keywords are duplicately used in the latest content information having been uttered and the guidance information to be hereinafter uttered or not.

The content information to be determined is the content information uttered by the DSRC unit 203 and received by the audio input unit 205 immediately before the control unit 204 executes the comparison process. The control unit 204 causes the speech recognition unit 206 to extract the keywords from the received content information.

The control unit 204 determines whether the extracted keywords include the keywords set in the comparison table T2 or not.

On the other hand, the control unit 204 determines whether or not the guidance information produced by the car navigation unit 201 includes the keyword preliminary set in the comparison table T2, before utterance.

If the control unit 204 determines that the same keyword is included in both of the content information and the guidance information with reference to the comparison table T2, the control unit 204 determines that both information is substantially identical. In the comparison table T2 in FIG. 18, the keyword "curve" is duplicately used.

If the control unit 204 determines that it is substantially identical, utterance of "curve" shall not be made by the car navigation unit 201. However, if the utterance precedence setting, which will be described later, is set in the car navigation unit 201, utterance may be made.

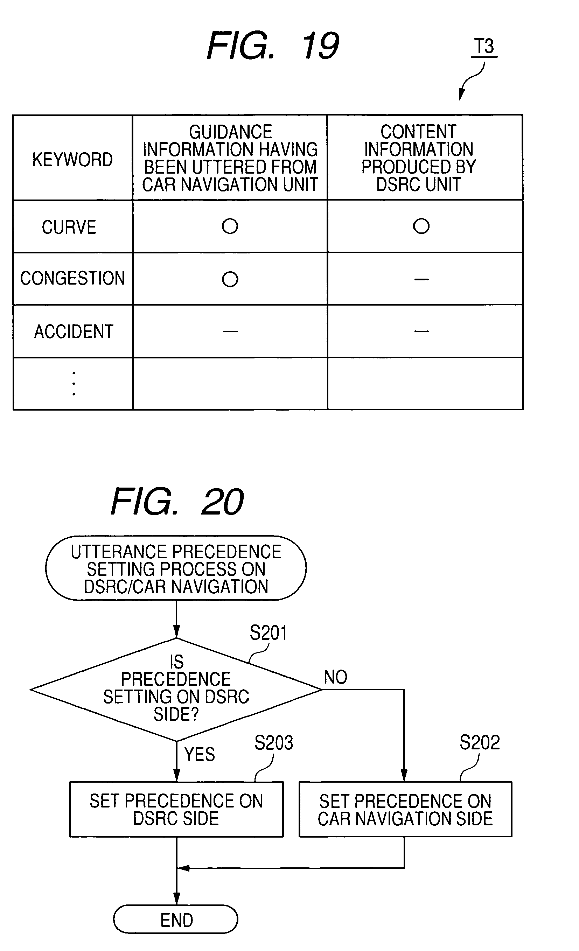

FIG. 19 shows a comparison table T3.

The comparison table T3 shown in FIG. 19 is stored in the memory unit 201f or the memory unit 203c. The comparison table T3 is referred to when the latest guidance information having been uttered by the car navigation unit 201 and the content information to be uttered by the DSRC unit 203 are compared with each other.

The comparison table T3 is similar to the comparison table T2 in that the tables are referred to when it is determined whether the duplicated keywords are included in the audio information having been uttered and the audio information to be uttered. Accordingly, the description thereof is omitted here.

If the duplicated keyword is included, the DSRC unit 203 shall not utter the audio information including this keyword. However, if the utterance precedence setting, which will be described later, is set on the DSRC unit 203, utterance may be made.

The audio input unit 205 includes a microphone, an AF (Audio Frequency) amplifier, a sampler and an A/D (Analog to Digital) converter.

The audio input unit 205 produces input audio information (digital signal) by amplifying an audio signal (analog signal) having been collected and produced by the microphone, and executes sampling and an A/D conversion.

The speech recognition unit 206 executes a process of eliminating noise on input audio information inputted from the audio input unit 205, and subsequently executes a speech recognition process.

As to the speech recognition process, the speech recognition unit 206 analyzes the input audio information and extracts the keywords, and thereby recognizes the content of the input audio information. The keywords to be extracted may be limited to the predetermined keywords in the aforementioned tables in FIGS. 17 to 19. Instead, audio information of every word included in the input audio information may be adopted as the keywords. The control unit 204 may execute the aforementioned speech recognition process.

In the description below, the speech recognition unit 206 extracts those limited to the predetermined keywords as the keywords.

The audio output unit 207 includes a D/A converter, an AF amplifier and a loudspeaker. The audio output unit 207 D/A converts and amplifies the guidance information produced by the car navigation control unit 201a, and drives the loudspeaker using the acquired analog audio signal. This thereby utters the guidance information.

The audio output unit 207 D/A converts and amplifies the content information temporarily stored in the memory unit 203c via the communication unit 203b, and drives the loudspeaker using the acquired analog audio signal. This thereby causes the audio output unit 207 to utter the content of the content information.

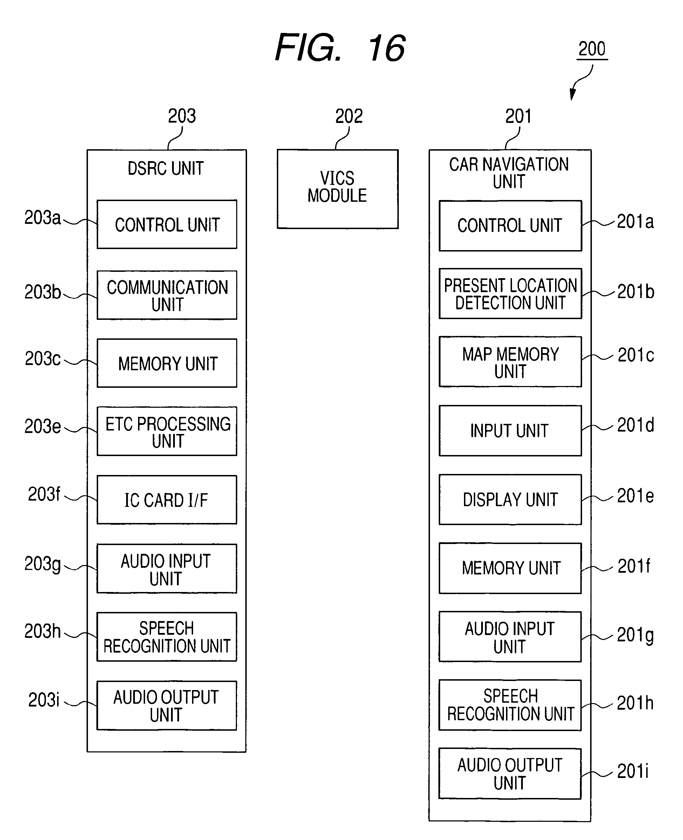

FIG. 16 shows a third functional block diagram of the vehicle-mounted device 200.

The basic configuration is similar to that of the second functional block diagram shown in FIG. 15. However, the configuration is different in that the car navigation unit 201 and the DSRC unit 203 independently operate by control operations of the control units 201a and 203a, respectively.

The car navigation unit 201 includes an audio input unit 201g, a speech recognition unit 201h, and an audio output unit 201i. The DSRC unit 203 includes an audio input unit 203g, a speech recognition unit 203h, and an audio output unit 203i.

According to the third functional block diagram, the control unit 201a refers to the comparison table T2 and executes the comparison process, and the control unit 203a refers to the comparison table T3 and executes the comparison process. A processing operation executed by the vehicle-mounted device 200 shown in the second block diagram of FIG. 15 will hereinafter be described. Note that the similar process can be executed on the vehicle-mounted device 200 shown in the third functional block diagram of FIG. 16, except for a case of referring to the comparison table T1 of FIG. 17.

Next, the processing operation executed by the vehicle-mounted device 200 in this embodiment will be described.

FIG. 20 shows a process on utterance precedence setting.

The utterance precedence setting is information defining, if the content of the guidance information produced by the car navigation unit 201 and the content information received by the DSRC unit 203 are duplicated, which one is precedent.

The control unit 204 determines whether the utterance precedence setting causes the DSRC unit 203 to precedently utter or not (step S201).

The utterance precedence setting may be set by the user via the input unit 201d.

When the control unit 204 determines the utterance precedence setting inputted from the input unit 201d is not set on the DSRC unit 203 (step S201; NO), the control unit 204 sets the utterance precedence setting on the car navigation unit 201, and stores this setting information in the memory unit 201f or memory unit 203c.

On the other hand, the control unit 204 determines the inputted utterance precedence setting is set on the DSRC unit 203 (step S201; YES), the control unit 204 stores this setting information in the memory unit 201f or memory unit 203c.

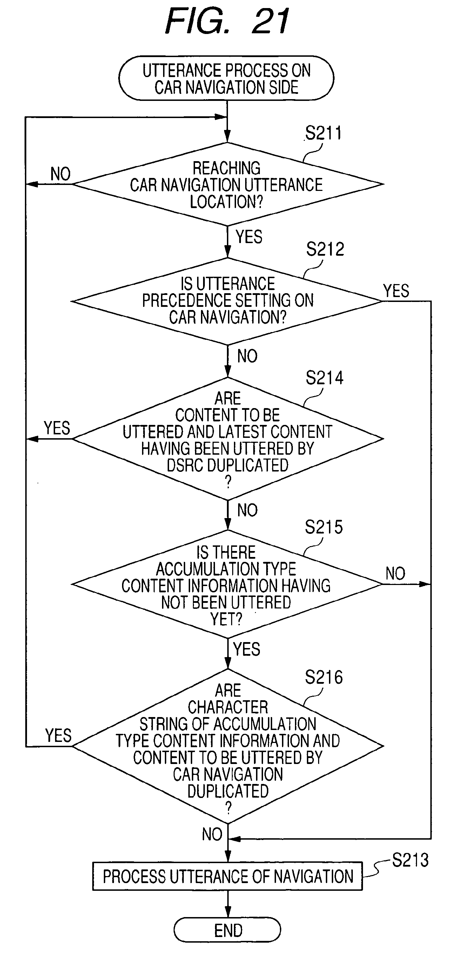

FIG. 21 shows a process of utterance at the car navigation unit 201.

The control unit 204 determines whether the object vehicle C reaches a location where the car navigation unit 201 should utter (hereinafter referred to as "utterance location") or not (step S211).

When the control unit 204 determines that the object vehicle C has not reached the utterance location yet (step S211; NO), the control unit 204 stands by until reaching the location.

When the object vehicle C has reached the utterance location (step S211; YES), the control unit 204 then determines whether the utterance precedence setting is set on the car navigation unit 201 or not (step S212). The determination here is made by the control unit 204 on the basis of the utterance precedence setting described in FIG. 20.

If the control unit 204 determines that the utterance precedence setting is set on the car navigation unit 201 (step S212; YES), the control unit 204 causes the car navigation unit 201 to utter the guidance information (step S213).

On the other hand, if the control unit 204 determines that the utterance precedence setting is not set on the car navigation unit 201 (step S212; NO), the control unit 204 compares the latest content having already been uttered by the DSRC unit 203 and the content to be uttered by the car navigation unit 201 with each other, and determines whether there are mutually duplicated keywords or not (step S214). Here, as to a process on presence or absence of the duplicated keyword executed by the control unit 204, the comparison table T2 of FIG. 18 is referred to.

When each side of the DSRC unit 203 and the car navigation unit 201 has not uttered yet, the control unit 204 may refer to the comparison table T1 of FIG. 17, and compare the keywords on the basis of the audio information on both sides. What can refer to the comparison table T1 is limited to the vehicle-mounted device 200 according to the second functional diagram of FIG. 15.

If there is the duplicated keyword (step S214; YES), the control unit 204 causes the car navigation unit 201 to stand by without utterance until the object vehicle C reaches the next utterance location.

On the other hand, there is not the duplicated keyword (step S214; NO), the control unit 204 determines whether or not there is the accumulation type content information not having been uttered yet in the memory unit 203c of the DSRC unit 203 (step S215).

Here, the accumulation type content information is content information temporarily stored in the memory unit 203c of the DSRC unit 203 and has a format which is processed when the object vehicle C has reached the predetermined location. When the content information having been accumulated so far exceeds the memory capacity of the memory unit 203c, the information may be deleted in order of occurrence. As a format opposed to this, there is the prompt type. The prompt type content information is specified so as to be processed immediately after reception of the content information from the roadside apparatus 20.

The content information includes information indicating the aforementioned accumulation type or the prompt type.

If there is no accumulation type content information in the memory unit 203c of the DSRC unit 203 (step S215; NO), the control unit 204 causes the car navigation unit 201 to utter the guidance information at the utterance location (step S213).

On the other hand, if there is the accumulation type content information in the memory unit 203c (step S215; YES), the control unit 204 compares the contents of the accumulation type content information and the guidance information to be uttered by the car navigation unit 201 with each other, and determines whether there are the mutually duplicated keywords or not (step S216).

If there are mutually duplicated keywords (step S216; YES), the control unit 204 causes the car navigation unit 201 not to utter the guidance information and to stand by until the object vehicle C reaches the next utterance location, on the basis of utterance precedence setting that causes utterance of the content information to precede. On the other hand, if there is no mutually duplicated keywords (step S216; NO), that is, the content of the guidance information is not duplicated in any one of the latest content uttered by the DSRC unit 203 and the content information of the accumulation type content information stored in the memory unit 203c, the control unit 204 causes the car navigation unit 201 to utter the guidance information (step S213).

As described above, in the utterance process at the car navigation unit 201, the control unit 204 executes a control of whether the guidance information produced by the car navigation unit 201 is to be uttered or not on the basis of the utterance precedence setting.

If the utterance precedence setting is set on the DSRC unit 203 and the contents of the utterance are duplicated, the content information is uttered and thus the guidance information is not uttered.

If the utterance precedence setting is set on the car navigation unit 201 or the contents of the content information and the guidance information are not duplicated, the car navigation unit 201 utters the guidance information, and the processing is finished.

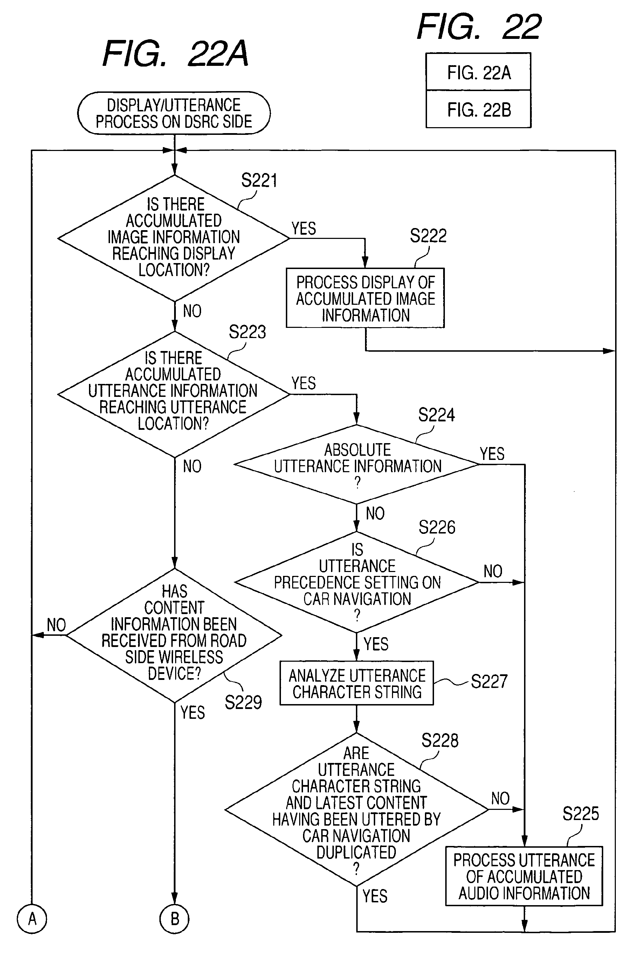

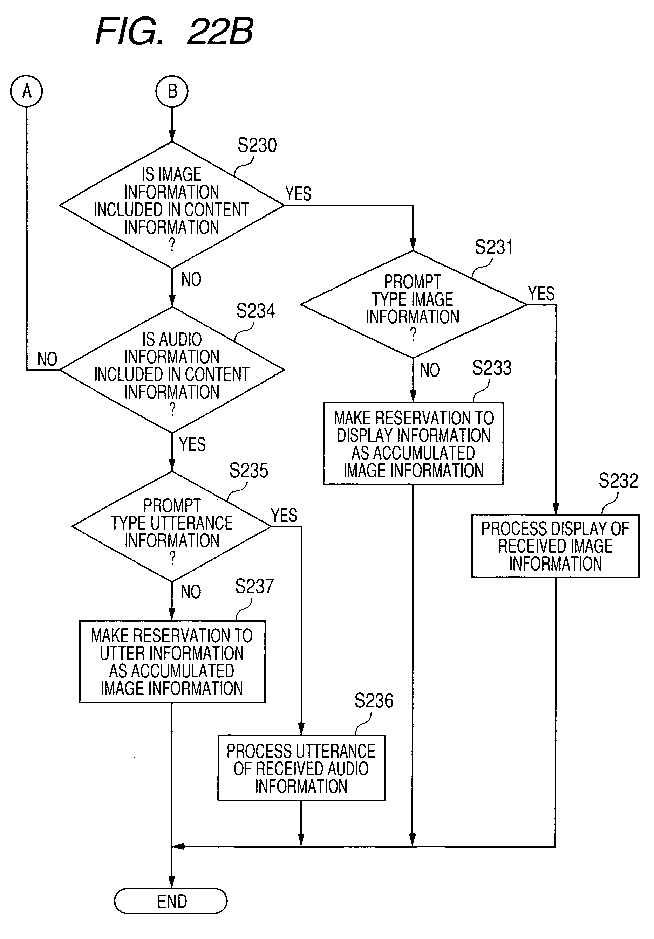

Next, a display process and an utterance process at the DSRC unit 203 will be described with reference to FIGs. 22A and 22B. As a precondition of these processes, it is provided that the object vehicle C mounted with the vehicle-mounted device 200 reaches a location (hereinafter referred to as "display location") where the accumulation type content information to be displayed or an utterance location.

The formats of the content information mainly include image information or audio information. The image information is displayed on the display unit 1e. The audio information is uttered by the audio output unit 207. The content information to be processed here is described with discrimination between the image information and the audio information.

The control unit 204 determines whether or not the accumulation type content information stored in the memory unit 203c includes image information to be displayed at the display location (step S221).

If the content information includes the image information to be displayed (step S221; YES), the control unit 204 causes the display unit 201e to display the image information (step S222).

On the other hand, if the content information does not include the image information to be displayed (step S221; NO), the control unit 204 determines whether the audio information to be uttered is stored in the memory unit 203c or not (step S223).

If the audio information to be uttered at the utterance location is stored in the memory unit 203c (step S223; YES), the control unit 204 determines whether the audio information is absolute utterance information or not (step S224).

Here, the absolute utterance information is information must be uttered at the utterance location irrespective of the utterance precedence setting (see FIG. 20).

First, a case where the audio information is stored in the memory unit 203c will be described (step S223; YES).

If the audio information stored in the memory unit 203c is the absolute utterance information (step S224; YES), the control unit 204 causes the DSRC unit 203 to utter the absolute utterance information (step S225).

On the other hand, it is not the absolute utterance information (step S224; NO), the control unit 204 determines whether the utterance precedence setting is set in the car navigation unit 201 or not (step S226).

If the utterance precedence setting is not set on the car navigation unit 201 (step S226; NO), that is, the utterance precedence setting is set on the DSRC unit 203, the control unit 204 causes the DSRC unit 203 to utter the audio information (step S225).

On the other hand, the utterance precedence setting is set on the car navigation unit 201 (step S226; YES), the control unit 204 causes the DSRC unit 203 to execute a process of analyzing a character string of the audio information (step S227).

Since the process of analyzing the character string of the audio information is a publicly known technique, the detailed description thereof is omitted. Note that audio synthesizing technique, referred to as TTS (Text To Speech), is utilized here.

The control unit 204 compares the latest content uttered by the car navigation unit 201 and the audio information stored in the memory unit 203c of the DSRC unit 203 with each other, and determines whether there are the keywords mutually duplicated or not (step S228).

As to the comparison process executed by the control unit 204 here, the comparison table T3 of FIG. 19 is referred to.

If any one of the DSRC unit 203 and the car navigation unit 201 has not uttered yet, the control unit 204 refers to the comparison table T1 in FIG. 17, and compares the keywords on the basis of the both pieces of the audio information. What can refer to the comparison table T1 is limited to the vehicle-mounted device 200 according to the second functional block diagram of FIG. 15.

If there are no duplicated keywords (step S228; NO), the control unit 204 causes the DSRC unit 203 to utter the audio information (step S225).

On the other hand, there are duplicated keywords (step S228; YES), the control unit 204 causes the DSRC unit 203 not to utter the audio information and to stand by until the object vehicle C reaches the next display location or the utterance location.

Next, a process where the audio information is not stored in the memory unit 203c will be described.

The processing returns to step S223; when the audio information to be uttered at the utterance location is not stored in the memory unit 203c (step S223; NO), the control unit 204 stands by until receiving the content information from the roadside apparatus 20 (step S229; NO).

When receiving the content information from the roadside apparatus 20 (step S229; YES), the control unit 204 determines whether the received content information includes the image information or not (step S230).

If the content information includes the image information (step S230; YES), the control unit 204 determines whether the image information is the prompt type or not (step S231).

If the image information is the prompt type (step S231; YES), the control unit 204 causes the display unit 201e to display the image information (step S232).

On the other hand, the image information is not the prompt type (step S231; NO), or the information is the accumulation type, the control unit 204 stores the image information in the memory unit 203c (step S233). The stored accumulation type image information is displayed when the object vehicle C reaches around the display location (see steps S221 and S222).

The processing returns to step S230. If the content information received from the roadside apparatus 20 does not include the image information (step S230; NO), the control unit 204 determines whether the content information includes the audio information or not (step S234).

If the content information does not include the audio information (step S234; NO), the control unit 204 stands by until the object vehicle C reaches the next display location or the utterance location.

On the other hand, the content information includes the audio information (step S234; YES), the control unit 204 determines whether the audio information is the prompt type or not (step S235).

If the audio information is the prompt type (step S235; YES), the control unit 204 causes the DSRC unit 203 to utter the audio information (step S236).

On the other hand, the audio information is not the prompt type (step S235; NO), or the information is the accumulation type, the control unit 204 stores the audio information in the memory unit 203c (step S237).

As described above, in the display process or the utterance process at the DSRC unit 203, the control unit 204 executes the control of whether or not displaying the content information received by the DSRC unit 203 or performing the audio output on the basis of the utterance precedence setting.

If the utterance precedence setting is set on the car navigation unit 201 and the content of the utterance is duplicated, the guidance information is uttered and thereby the audio information included in the content information is not uttered.

The utterance precedence setting is set on the DSRC unit 203 or the contents of the audio information and the guidance information included in the content information are not duplicated, the DSRC unit 203 utters the audio information and finishes the process.

In the above process, the case where the audio information is duplicated in the DSRC unit 203 and the car navigation unit 201 has mainly been described. However, it is not necessarily limited to the audio information. For example, if the image information is duplicated, the image information of any one of the DSRC unit 203 and the car navigation unit 201 may be displayed. In this case, the comparison process comparing the image information may be determined by the control unit 204 on the basis of a predetermined image analysis algorithm.

As described above, this embodiment compares the content of the guidance information produced by the car navigation unit 201 and the content of the content information received by the DSRC unit 203 from the roadside apparatus 20; if the contents are substantially identical to each other, any one of the pieces of information is uttered. Accordingly, this prevents the vehicle-mounted device 200 from uttering the duplicated content, thereby allowing user's irksomeness to be alleviated.

Any one of the guidance information and the content information may precedently be uttered on the basis of the utterance precedence setting. This can make the information on which the utterance precedence setting is set be always uttered, and can prevent the important content from not being uttered.

If the content information received from the center apparatus 30 via the roadside apparatus 20 is the prompt type, the DSRC unit 203 may precedently utters the content of the content information. This allows the user not to miss the prompt type utterance, which is important information.

When the guidance information and the content information are compared with each other, it may be determined whether there is the predetermined keyword in both pieces of the information; if the comparison table T1 or T2 is referred and there are the duplicated keywords, it may be determined that both pieces of the information are substantially identical to each other. This can prevent the frequently uttered content from being duplicately uttered.

It may be determined whether the latest guidance information or the content information uttered includes the predetermined keyword or not. This can prevent duplicate utterance of the content with respect to the latest content uttered from being uttered.

Any one of the contents including the duplicated keyword of the guidance information and the content information may be uttered, and both of the contents including the keyword without duplication may be uttered. This can prevent the required content from not being uttered.

The identification information included in the guidance information and that in the content information may be compared with each other. The identification information indicates the classification of the contents to be uttered. Each of the guidance information and the content information includes the identification information. Accordingly, the comparison process of the identification information can determine whether the both contents are duplicated or not. The determination of whether the uttered contents are duplicated or not according to the comparison of the identification information can simplify and speed the processing.

## Claims

1. vehicle-mounted device including a DSRC unit receiving content information from a center apparatus via a roadside apparatus, and a car navigation unit storing guidance information pertaining to traveling of a vehicle, the vehicle-mounted device comprising:
output means for outputting the content information and the guidance information;
storing means for storing position information on a position where the roadside apparatus is disposed; and
control means for causing the output means to output any one of the content information and the guidance information on the basis of the position information stored by the storing means, if the content information and the guidance information meet conditions for outputting within a predetermined term.

2. The vehicle-mounted device according to claim 1, further comprising detection means for detecting a present location of the vehicle, wherein when the DSRC unit receives the content information via the roadside apparatus, the control means produces position information which regards the present location detected by the detection means as the position of the roadside apparatus, and causes the storing means to store the position information.

3. The vehicle-mounted device according to claim 1 or 2, wherein the control means, upon receiving prompt type content information via the roadside apparatus, produces the position information and causes the storing means to store the position information.

4. The vehicle-mounted device according to any one of claims 1 to 3, wherein the control means calculates a distance between the vehicle and the roadside apparatus on the basis of the stored position information, and, if the calculated distance is determined to be within a predetermined distance, stops outputting accumulation type content information and the guidance information.

5. The vehicle-mounted device according to any one of claims 1 to 3, wherein the control means calculates a time period until the vehicle reaches the position of the roadside apparatus on the basis of the stored position information, and, if the calculated time period is determined to be within a predetermined time period, stops outputting accumulation type content information and the guidance information.

6. The vehicle-mounted device according to any one of claims 1 to 3, wherein the control means, if it is determined that a distance between the vehicle and the roadside apparatus is within a predetermined distance and a time period until the vehicle reaches the position of the roadside apparatus is within a predetermined time period on the basis of the stored position information, stops outputting accumulation type content information and the guidance information.

7. The vehicle-mounted device according to any one of claims 1 to 6, further comprising display means for displaying map information,
wherein the control means causes the display means to display the position of the roadside apparatus in a superimposed manner on the map information, on the basis of the position information.

8. An utterance priority method in vehicle-mounted device including a DSRC unit receiving content information from a center apparatus via a roadside apparatus, and a car navigation unit storing guidance information pertaining to traveling of a vehicle, the method comprising the steps of:
outputting the content information and the guidance information;
storing position information on a position where the roadside apparatus is disposed; and
causing the outputting means to output any one of the content information and the guidance information on the basis of the position information stored by the storing means.

9. vehicle-mounted device including a DSRC unit wirelessly communicating with a center apparatus, receiving content information from the center apparatus and audio-outputting the content information, and a car navigation unit audio-outputting guidance information pertaining to traveling of a vehicle, the vehicle-mounted device comprising
control means for determining whether the content information and the guidance information are substantially identical to each other or not on the basis of both, and for, if determining that both are substantially identical, causing any one of the DSRC unit and the car navigation unit to audio-output the information.

10. The vehicle-mounted device according to claim 9, further comprising storing means for storing utterance precedence setting information, wherein the control means causes the unit to precedently audio-output any one of the content information at the DSRC unit and the guidance information at the car navigation unit on the basis of the stored utterance precedence setting information.

11. The vehicle-mounted device according to claim 9 or 10, wherein the control means determines whether the content information received from the center apparatus is a prompt type or not, and, if the information is determined to be the prompt type, causes the DSRC unit to precedently audio-output the content information.

12. The vehicle-mounted device according to any one of claims 9 to 11, wherein the control means compares a keyword included in the content information and a keyword included in the guidance information with each other, and, if a duplicated keyword is determined to exist, causes any one of the DSRC unit and the car navigation unit to audio-output the information.

13. The vehicle-mounted device according to any one of claims 9 to 12, wherein each of the DSRC unit and the car navigation unit comprises audio input means, and wherein the control means analyzes the audio information inputted via the audio input means, compares a keyword included in the audio information and a keyword included in any one of the content information and the guidance information with each other, and, if a duplicated keyword is determined to exist, causes any one of the DSRC unit and the car navigation unit to audio-output the information.

14. The vehicle-mounted device according to any one of claims 9 to 13, wherein the control means, if it determines that there is a duplicated keyword among keywords of the content information and guidance information pertaining to the traveling of vehicle, causes any one of the DSRC unit and the car navigation unit to audio-output the content including the duplicated keyword, and causes both of the DSRC unit and the car navigation unit to audio-output the content including a keyword without duplication.

15. The vehicle-mounted device according to any one of claims 9 to 14, wherein the content information and the guidance information include identification information indicating classification of information, and wherein the control means compares the identification information included in the content information and the identification information included in the guidance information with each other, determines whether both identification information are identical to each other or not, and, if it determines that they are identical, causes any one of the DSRC unit and the car navigation unit to audio-output the information.

16. An utterance priority method in vehicle-mounted device including a DSRC unit wirelessly communicating with a center apparatus, receiving content information from the center apparatus and audio-outputting the content information, and a car navigation unit audio-outputting guidance information pertaining to traveling of a vehicle, the method comprising the steps of:
determining whether the content information and the guidance information are substantially identical to each other or not on the basis of both, and of, if both are determined to be substantially identical, causing any one of the DSRC unit and the car navigation unit to audio-output the information.
